# EUROPEAN PATENT APPLICATION

(11) **EP 1 500 908 A1**
(43) Date of publication of application: **26.01.2005**
(21) Application number: 04015899.0
(22) Date of filing: 06.07.2004
(51) Int. Cl.: G01C 21/36, G08G 1/0969

(54) **Data search apparatus and method, navigation apparatus and method, data set and computer program product for data search**

(30) Priority: 22.07.2003 JP 2003200061
(71) Applicant: Pioneer Corporation, Meguro-ku, Tokyo (JP)
(72) Inventor: Uchida, Takayuki, Yamada, Kawagoe-shi, Saitama (JP); Kiuchi, Noriyoshi, Yamada, Kawagoe-shi, Saitama (JP)
(74) Representative: Viering, Jentschura & Partner

(57) **Abstract**

A data search apparatus (200) for searching a general data list for desired spot data indicating a desired spot, the general data list comprising: original data (211) including a plurality of original spot data each indicating a spot on a map; and difference data (212) including at least one update spot data indicating an updated spot that is updated on the basis of the original data, said data search apparatus comprising: a first acquirement device (201) for acquiring at least one of the plurality of original spot data; a second acquirement device (202) for acquiring the update spot data from the difference data; and a data output device (203) for combining the update spot data acquired by said second acquirement device (202) with the original spot data acquired by said first acquirement device (201) and outputting the combined data including the desired spot data.

## Description

### BACKGROUND OF THE INVENTION

### 1. Field of the Invention

The present invention relates to a data search apparatus and method, a navigation apparatus and method such as an on-vehicle navigation apparatus, a data set and a computer program product for the route search.

### 2. Description of the Related Art

Conventionally, an optical record medium such as a CD-ROM or a DVD-ROM, and a magnetic record medium such as a hard disk are generally well known respectively as a record medium on/in which electronic information data is recorded. Accompanying with development in technology, storage volume of such a record medium is ever-increasing. For example, even a single record medium achieves to record a great volume of contents data, which may be of gigabytes order.

More specifically, in a navigation apparatus for on-vehicle use, map data that is recorded on/in such a record medium is used to display a current position of a navigation object such as a vehicle or the like on which the navigation apparatus is mounted, or to provide various features such as a route guidance and so on. In the map data, road data indicating a road, spot data indicating information about spot such as a facility, a touristic spot and so on that often exists along the road, or other various data necessary for the navigation processing may be included. Accompanying with the sophisticated navigation processing, the map data may be three-dimensional road contents data and video information, and may carry a few gigabytes of information.

On the other hand, there is proposed a technology in which difference information including change part information of the video data (e.g. a newly added symbol video image for indicating a touristic spot to be displayed on the map) is superimposed on the video data (e.g. the map video image) and thereby the changed video data can be used only with a relatively simple processing (see Japanese Patent Application Laid-Open No. 2003-16469). On the other hand, there is proposed a technology in which, with regard to text data such as laws or the like that may be often revised or updated, difference between a law before the revision and the law after the revision is acquired, and thereby a statute book or the like can be prepared relatively easily (see Japanese Patent Application Laid-Open No. Hei7-334574).

### SUMMARY OF THE INVENTION

In the aforementioned map data used for the navigation apparatus, however, there are problems as follows. For example, updating the map data, which may be required when a road map is changed or when a new touristic spot appears, is achieved by rewriting or regenerating the entire map data. Nevertheless, it is a technical weak point to involve the regenerating or rewriting the entire map data, even in the case that only a part of the map data is changed. Particularly, since the spot data covers facilities or touristic spots all over Japan, the data volume is enormous. Thereby, there is another technical weak point to increase various kinds of costs (e.g. processing cost, economical cost and so on) for updating the data.

To solve the above problems, a technology using the difference data as disclosed in Japanese Patent Application Laid-Open No. 2003-16469 may be employed. However, the spot data often involves a change due to deletion or correction, besides addition. There is a technical weak point of failing to reflect such a change appropriately even by superimposing the difference data (i.e. new video image data) on the map data.

The present invention has been accomplished in view of the above problems for example. It is therefore an object of the present invention to provide a data search apparatus for and method of relatively easily utilizing map data in/on which the latest road condition or the like is reflected, without updating the entire map data including the spot data and so on. It is a further object of the present invention to provide a navigation apparatus for and method of performing a predetermined navigation processing efficiently and appropriately with the data search apparatus or method. It is a further object of the present invention to provide a data set for the data search apparatus or method and to provide a computer program product for making a computer function as the data search apparatus.

The above object of the present invention is achieved by a data search apparatus according to the present invention, in which the apparatus is for searching a general data list for desired spot data indicating a desired spot, the general data list comprising: original data including a plurality of original spot data each indicating a spot on a map; and difference data including at least one update spot data indicating an updated spot that is updated on the basis of the original data, the data search apparatus comprising: a first acquirement device for acquiring at least one of the plurality of original spot data; a second acquirement device for acquiring the update spot data from the difference data; and a data output device for combining the update spot data acquired by the second acquirement device with the original spot data acquired by the first acquirement device and outputting the combined data as the desired spot data.

The above object of the present invention is achieved by a data search method according to the present invention, in which the method is for searching a general data list for desired spot data indicating a desired spot, the general data list comprising: original data including a plurality of original spot data each indicating a spot on a map; and difference data including at least one update spot data indicating an updated spot that is updated on the basis of the original data, the data search method comprising: a first acquirement process of acquiring at least one of the plurality of original spot data; a second acquirement process of acquiring the update spot data from the difference data; and a data output process of combining the update spot data acquired at the second acquirement process with the original spot data acquired at the first acquirement process and outputting the combined data as the desired spot data.

The above object of the present invention is achieved by a navigation apparatus according to the present invention, in which the apparatus comprising a data search apparatus for searching a general data list for desired spot data indicating a desired spot, the general data list comprising: original data including a plurality of original spot data each indicating a spot on a map; and difference data including at least one update spot data indicating an updated spot that is updated on the basis of the original data, the data search apparatus comprising: a first acquirement device for acquiring at least one of the plurality of original spot data; a second acquirement device for acquiring the update spot data from the difference data; and a data output device for combining the update spot data acquired by the second acquirement device with the original spot data acquired by the first acquirement device and outputting the combined data as the desired spot data, the navigation apparatus further comprising: a route search device for searching a route to a spot indicated by the desired spot data outputted from said data output device; and a display output device for displaying the route.

The above object of the present invention is achieved by a navigation method according to the present invention, in which the method implemented in a navigation apparatus comprising a data search apparatus for searching a general data list for desired spot data indicating a desired spot, the general data list comprising: original data including a plurality of original spot data each indicating a spot on a map; and difference data including at least one update spot data indicating an updated spot that is updated on the basis of the original data, the data search apparatus comprising: a first acquirement device for acquiring at least one of the plurality of original spot data; a second acquirement device for acquiring the update spot data from the difference data; and a data output device for combining the update spot data acquired by the second acquirement device with the original spot data acquired by the first acquirement device and outputting the combined data as the desired spot data, the navigation method further comprising: a route search process of searching a route to a spot indicated by the desired spot data outputted from the data output device; and a display output process of displaying the route.

The above object of the present invention is achieved by a data set according to the present invention, in which the data set comprising: original data including a plurality of original spot data each indicating a spot on a map; and difference data including at least one update spot data indicating an updated spot that is updated on the basis of the original data.

The above object of the present invention is achieved by a computer program product according to the present invention, in which the computer program product in a computer-readable medium for tangibly embodying a program of instructions executable by a computer provided for a data search apparatus for searching a general data list for desired spot data indicating a desired spot, the general data list comprising: original data including a plurality of original spot data each indicating a spot on a map; and difference data including at least one update spot data indicating an updated spot that is updated on the basis of the original data, said data search apparatus comprising: a first acquirement device for acquiring at least one of the plurality of original spot data; a second acquirement device for acquiring the update spot data from the difference data; and a data output device for combining the update spot data acquired by said second acquirement device with the original spot data acquired by the first acquirement device and outputting the combined data as the desired spot data, the program of instructions is to make the computer function as at least one of the first acquirement device, the second acquirement device and the data output device.

The nature, utility, and further features of this invention will be more clearly apparent from the following detailed description with reference to preferred examples of the invention when read in conjunction with the accompanying drawings briefly described below.

### BRIEF DESCRIPTION OF THE DRAWINGS

FIG. 1 is a block diagram conceptually illustrating a fundamental structure of an embodiment of the data search apparatus according to the present invention.
FIG. 2 is a block diagram conceptually illustrating a fundamental structure of an embodiment of the navigation apparatus according to the present invention.
FIG. 3 is a block diagram illustrating a fundamental structure of an example of the navigation apparatus according to the present invention.
FIG. 4 is a schematic view conceptually illustrating the original data and the difference data used for the navigation apparatus in an example of the present invention.
FIG. 5 is a flow chart illustrating an operational flow for a desired spot data search, on the basis of the original data and the difference data shown in FIG. 4.
FIG. 6 is a schematic view conceptually illustrating the original data, the difference add data, the difference delete data and the difference correct data used for the navigation apparatus in an example of the present invention.
FIG. 7 is a flow chart illustrating an operational flow of searching desired spot data, on the basis of the original data, the difference add data, the difference delete data and the difference correct data shown in FIG. 6.
FIG. 8 is a view conceptually illustrating a data structure of the original data used for the navigation apparatus in the first specific example.
FIG. 9 is a view conceptually illustrating a data structure of the difference data used for the navigation apparatus in the first specific example.
FIG. 10 is a flow chart illustrating an operational flow for a desired spot data search, on the basis of the original data shown in FIG. 8 and the difference data shown in FIG. 9.
FIG. 11 is a view conceptually illustrating a data structure of the original data used for the navigation apparatus in the second specific example.
FIG. 12 is a view conceptually illustrating a data structure of the difference data used for the navigation apparatus in the second specific example.
FIG. 13 is a flow chart illustrating an operational flow for a desired spot data search, on the basis of the original data shown in FIG. 11 and the difference data shown in FIG. 12.
FIG. 14 is a view conceptually illustrating a data structure of the original data used for the navigation apparatus in the third specific example.
FIG. 15 is a view conceptually illustrating a data structure of the difference data used for the navigation apparatus in the third specific example.
FIG. 16 is a flow chart illustrating an operational flow for a desired spot data search, on the basis of the original data shown in FIG. 14 and the difference data shown in FIG. 15.
FIG. 17 is a view conceptually illustrating a data structure of the original data used for the navigation apparatus in the fourth specific example.
FIG. 18 is a view conceptually illustrating a data structure of the difference data used for the navigation apparatus in the fourth specific example.
FIG. 19 is a flow chart illustrating an operational flow for a desired spot data search, on the basis of the original data shown in FIG. 17 and the difference data shown in FIG. 18.

### DETAILED DESCRIPTION OF THE PREFERRED EXAMPLES

### (Embodiments)

Various embodiments of the present invention will now be discussed.

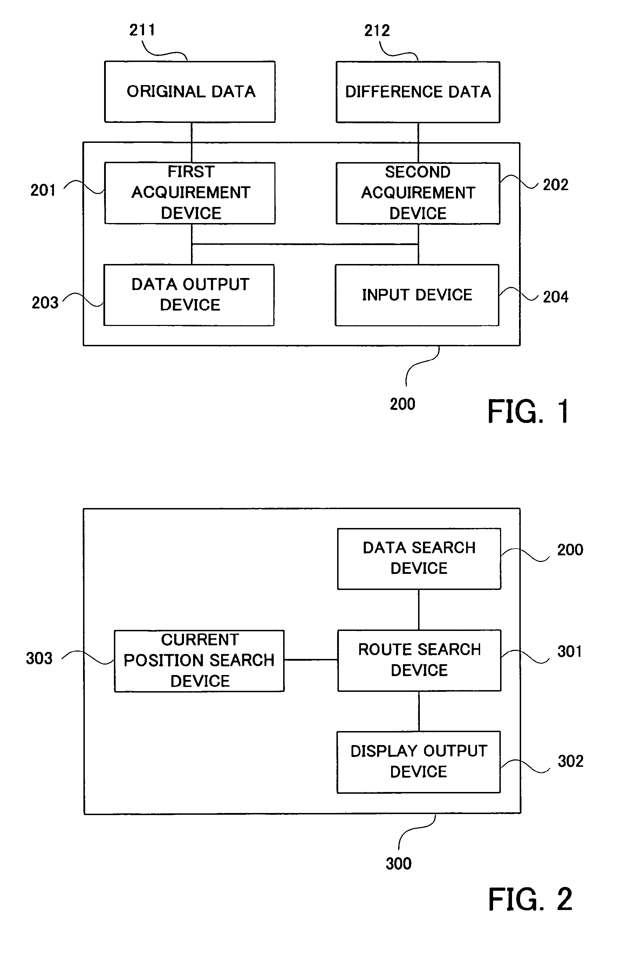

According to an embodiment of the present invention (i.e. the data search apparatus 200), as shown in FIG. 1, there are provided with: a first acquirement device 201; a second acquirement device 202; and a data output device 203. The first acquirement device 201 is arranged to acquire at least one original spot data from original data 211 including a plurality of original spot data each indicating individual spot on a map. The second acquirement device 202 is arranged to acquire update spot data from difference data 212 including at least one update spot data indicating an updated spot on the basis of the original data 211. The data output device 203 is arranged to combine the update spot data acquired by the second acquirement device 202 with at least one original data acquired by the first acquirement device 202 and output the combined data including desired spot data.

According to this embodiment, using the difference data 212 in addition to the original data 211 makes it possible to search spots or the like relatively easily and efficiently on the basis of the latest spot data, without updating the entire original data 211. The "spot data (i.e. original spot data, update spot data and desired spot data" herein may be an administrative district (or the name thereof) such as city, town, village and so on; a road, bridge, building, immovable and so on (or the proper noun or general noun thereof); data indicating a proper noun or general noun of a facility on the spot. Namely, the "spot data" should be construed as a broad meaning including data indicating information about or depend on the spot, such as position information such as latitude/longitude of individual spot or individual facility, detail information about individual spot or individual facility, and so on.

More specifically, the first acquirement device 201 acquires at least one original spot data from among a plurality of original spot data included in the original data 211. The at least one original spot data is preferably the same as desired spot data to be searched, or the same as original data having an identifiable relationship with the desired spot data. The "original data" herein is data generated at a predetermined time point (year, date and so on), and includes the latest spot data at the predetermined time point. Incidentally, if the original data corresponding to the desired spot data does not exist in the original data 211, for example if a newly added spot is to be searched, the first acquirement device 201 need not necessarily acquire the original spot data corresponding to the desired spot data from the original data 211.

Accompanying or synchronizing with the operation of the first acquirement device 201, the second acquirement device 202 acquires the update spot data included in the difference data 212. The "difference data" herein includes spot data that is changed from the predetermined time point when the original data 211 is generated. In this case, the second acquirement device 202 preferably acquires the update spot data corresponding to the desired spot data. That is, it is preferably to acquire the update spot data indicating an update of the original spot data corresponding to the desired spot data (i.e. a spot indicated by the original spot data). Incidentally, if the update data indicating the update of the original spot data corresponding to the desired spot data does not exist in the difference data 212 (i.e. if the corresponding original spot data is not updated), the second acquirement device 202 need not necessarily acquire the update spot data from the difference data 212. However, it may acquire update spot data indicating that the original spot data is not updated.

Then, the data output device 203 combines (or merges) the update spot data acquired by the second acquirement device 202 with the original spot data acquired by the first acquirement device 201, and outputs the combined data as the desired spot data (or the combined data including the desired spot data) indicating the desired spot, i.e. the search result. The combination of the update spot data may be achieved using the update spot data itself acquired by the second acquirement device 202 as it is, or may be achieved using data derived via a predetermined calculation or information processing from the update spot data acquired by the second acquirement device 202.

Incidentally, the original data 211 and the difference data 212 may be of a data format in which spot data is stored in a text format, or may be of a data format of a hierarchy structure as mentioned later. Alternatively, the original data 211 and the difference data 212 are not limited to these format listed above, and a predetermined format may be employed, insofar as a predetermined spot is identified.

On the other hand, the original spot data or the update spot data includes data from which a predetermined spot can be identified, such as information of the name, or latitude/longitude of the spot. With regard to the update spot data, it may include information indicating deletion, addition or correction (e.g. a flag mentioned below). Alternatively, with regard to the data format of a hierarchy structure, it may include information indicating a relationship with other data (e.g. offset information mentioned below). However, the original data 211 and the difference data 212 preferably have the same data format, in view of simplicity in the combination of the original spot data and the update spot data, and in view of the acquirement of the spot data (the original spot data and the update spot data).

Conclusively, according to this embodiment of the present invention, the data search apparatus make it possible to perform a data search such as a spot search, on the basis of the original data 211 in/on which the latest spot information is reflected, without updating the entire original data 211. Thereby, in the navigation apparatus including the data search apparatus 200 of this embodiment, it is possible to perform more appropriately the navigation processing such as a route search, on the basis of the map data in/on which the latest road condition or the like is reflected, and to reduce the load of the user to update the map data or the like. Additionally, it is also possible for the author of the map data to reduce the economical cost or the time cost for updating the original data 211.

Incidentally, in this embodiment, an input device 204 may be employed, as shown in FIG. 1. Using the input device 204 makes it possible for the user of this apparatus to input an instruction of searching desired spot data to be searched (e.g. a designation of the search object).

Incidentally, in this embodiment, the data to be searched is not limited to the spot data. If it is a predetermined text data for example, the data search can be achieved relatively easily due to the operation of the data search apparatus 200 mentioned above. At least one of the original data 211 and the difference data 212 may be acquired from an information record medium such as a hard disk, a DVD-ROM and so on, or from a removal type information record medium such as a memory stick, a PC card and so on, or may be acquired in downloading via the network.

Additionally, the desired spot data outputted from the data output device is not a single desired spot data indicating a desired spot. It may be outputted as a plurality of desired spot data including spots relating to the desired spot.

And it is possible to construct that the data output device 203 may combine a part of (or entire) the difference data 212 with a part of (or entire) the original data 211. Thereby the data output device 203 may output the combined data including the desired spot data or extract the desired spot data from the combined data.

In an aspect of this embodiment of the present invention, the difference data 212 includes difference add data, as the update spot data, indicating the added spot. If the second acquirement device 202 acquires the difference add data, the data output device 203 outputs the original spot data acquired by the first acquirement device 201 to which the original spot data indicating the added spot, as the desired spot data.

According to this aspect, the difference add data makes it possible to reflect relatively easily the newly added spot into the original data 211. Therefore, the data search apparatus 200 of this embodiment can search appropriately a corresponding spot, even if the spot is newly added to the original data 211. Incidentally, the difference add data is not limited to a specific embodiment insofar as addition of a predetermined spot is indicated. For example, the addition may be indicated by a flag or the like.

In another aspect of the embodiment of the present invention, the difference data 212 includes difference delete data, as the update spot data, indicating that the updated spot is deleted from the map. If the second acquirement device 202 acquires the difference delete data, the data output device 203 outputs the original data acquired by the first acquirement device 201 from which the original spot data indicating the deleted spot is deleted, as the desired spot data.

According to this aspect, the difference delete data makes it possible to reflect relatively easily the deleted spot, which may be deleted corresponding to a disused facility, into the original data 211. Therefore, according to the data search apparatus 200 of this embodiment, it is possible to avoid an inconvenience of mis-searching the spot already deleted from the original data 211. That is, it is relatively easy to perform a spot search on the basis of the latest map. Incidentally, the difference delete data is not limited to a specific embodiment, insofar as deletion of a predetermined spot can be indicated. For example, the deletion may be indicated by a flag or the like.
] In another aspect of this embodiment of the present invention, the difference data 212 includes difference correct data, as the update spot data, indicating that the updated spot is changed or corrected. If the second acquirement device 202 acquires the difference correct data, the data output device 203 changes a part of the original spot data acquired by the first acquirement device 201, the part indicating the corrected spot, on the basis of the difference correct data, and outputs the changed data as the desired spot data.

According to this aspect, the difference correct data makes it possible to reflect information about the corrected spot relatively easily into the original data 211. Therefore, according to the data search apparatus 200 of this embodiment, it is possible to avoid an inconvenience of searching and outputting the old spot data of the desired spot data. That is, it is possible to perform a spot search on the basis of the latest map. Incidentally, the difference correct data is not limited to a specific embodiment, insofar as correction of a predetermined spot can be indicated.

In another aspect of this embodiment of the present invention, the difference data 212 includes a plurality of update spot data. Additionally, one of the plurality of original spot data is associated with at least another of the plurality of original spot data, and has a data format of a hierarchy structure having offset information indicating a relationship with the another original spot data. Furthermore, one of the plurality of update spot data is associated with at least another of the plurality of update spot data, and has a data format of a hierarchy structure having offset information a relationship with the another update spot data. The first acquirement device 201 is arranged to acquire the original spot data, with reference to the offset information indicating the relationship with the another original spot data. Additionally, the second acquirement 202 is arranged to acquire the update spot data, with reference to the offset information indicating the relationship with the another update spot data.

According to this aspect, it is possible to perform a data search more efficiently, using the original data 211 and the difference data 212 having the data format of the hierarchy structure having 2 stages, 3stage, or more. In this case, each of the plurality of original spot data, as well as each of the plurality of update spot data, is preferably associated by the offset information, between adjacent stages. The original spot data and the update spot data can be acquired relatively easily and appropriately, with reference to the offset information.

Incidentally, in such a hierarchy structure, each of the plurality of original spot data, as well as each of the plurality of update spot data, is preferably categorized appropriately. That is, they are preferably classified appropriately from an upper conceptual category (e.g. category of spots by rough genre, category of spots by prefecture, and so on) to a lower conceptual category (e.g. category of spots by more detail genre, category of spots by municipality, and so on).

In an aspect of the data search apparatus for searching data on the basis of the original data 211 and the difference data 212 having the data format of the hierarchy structure mentioned above, each of one original spot data and one update spot data has their stage information respectively indicating their relative stage position in each hierarchy structure. If one update spot data indicates that one original spot data is updated, one original spot data and one update spot data may have the same stage information.

In this arrangement, it is possible to recognize appropriately a relationship between the original spot data (or the desired spot data) and the update spot data, with reference to the stage information. That is, a selective acquirement of the update spot data having the same stage information as the original spot data is sufficient to judge whether or not the original spot data is updated. Therefore, since the acquirement of a minimum updated spot data allows a desired spot search, it brings a great advantage of reducing a processing cost required for the search.

As mentioned above, in an aspect of the data search apparatus including the stage information, one update spot data has a change flag indicating that another original spot data, which is associated by the offset information with one original spot data including the same stage information as one update spot data, is changed. The second acquirement device 202 may be arranged so that it acquires another spot data having the same stage information as another original spot data, if the change flag indicates that another original spot data is changed, and it does not acquire another update spot data having the same stage information as another original spot data, in the case that the change flag indicates that another original spot data is not changed.

In this arrangement, it is possible to perform a data search (spot search) more efficiently, with reference to the change flag. That is, if the change flag indicates that another original spot data is not changed, it is possible to search appropriately a desired spot by acquiring the original spot data from the original data 211, without acquiring the update spot data indicating these changes of the original data from the difference data 212. On the other hand, if the change flag indicates that another original spot data is changed, it is possible to search appropriately a desired spot by acquiring the update spot data indicating a change of said another original spot data from the difference data 212. Therefore, referring to the change flag makes it possible to limit the access (i.e. the number of the access) to the difference data 212 to a minimum extent. Or referring to the change flag makes it possible to limit the acquirement (i.e. the number of the acquirement) of the update spot data from the difference data 212 to a minimum extent. Therefore, it brings a great advantage of reducing a processing cost for the data search.

Incidentally, the change flag preferably indicates a change of the other original data further associated with another original spot data (i.e. original data indirectly associated with one original spot data), in addition to indicating a change of another original spot data associated with one original spot data (i.e. original spot data directly associated with one original spot data).

As mentioned above, in an aspect of the data search apparatus for performing a data search using the difference data 212 including the change flag, the first acquirement device 201 may be arranged so that it does not acquire another original spot data having the same stage information as another update spot data, if the change flag indicates that another original spot data is changed.

In this arrangement, the load for the data search (e.g. spot search) can be reduced. That is, if the change flag indicates that another original spot data is changed, the updated spot data indicating the latest spot information can be acquired from the difference data 212 to perform appropriately the spot search. That is, since the appropriate spot search is achieved without acquiring another original spot data from the original data 211, it is possible to reduce the processing cost for acquiring the original spot data from the original data 211.

Incidentally, in this aspect, the update spot data preferably indicates information substantially the same as the original spot data. That is, it is preferable that the update spot data can identify information about the updated spot itself, in addition to indicating that the original spot data is changed.

As mentioned above, in an aspect of the data search apparatus for searching for data in the original data 211 and the difference data 212 each in the hierarchy data format, the plurality of original spot data and the plurality of update spot data may be arranged so that each data has a spot code indicating at least one of genre, category and position of the spot.

In this arrangement, it is possible to indicate more easily and appropriately spot information indicated by each of the original data or each of the update spot data. The "genre of the spot" herein means a common feature in a classification, in the case that individual spot is categorized into a rough class having the common feature. For example, it means "a spot relating to sport", "a spot relating to gourmet", "a spot relating to fashion" and so on. On the other hand, the "category of the spot" herein means a classification under which the spots having a common feature is identified or distinguished (more specifically, a segmentalized name in the case that the aforementioned classification by genre is further segmentalized). For example, the genre is "sport", it means "football stadium", "baseball stadium", "swimming pool" and so on. On the other hand, the "position of the spot" herein means a classification by position of the spot literally. For example, it means "prefecture", "municipality", "street number or house number (i.e. "chou-chou-moku in Japan")" and so on.

Incidentally, the original data 211 or the difference data 212 is preferably of a data format having a hierarchy structure categorized appropriately by genre, category or position of a spot indicated by the original spot data or the update spot data. Thereby, it is relatively easy to recognize a relative stage position of individual spot (i.e. the original spot data or the update spot data) in the hierarchy structure, with reference to the spot code. Also in this aspect, information such as the stage information mentioned above may be employed.

As mentioned above, in an aspect of the data search apparatus for performing a data search on the basis of the original data 211 and the difference data 212 including the spot code, the second acquirement device 202 may be arranged so that it acquires update spot data including a spot code the same as the original data acquired by the first acquirement device 201, in the case that the update spot data having the spot code the same as the original spot data is included in the difference data 212. On the other hand, the data output device 203 may be arranged to replace the original spot data acquired by the first acquirement device 201 with the update spot data acquired by the second acquirement device 202 and output the update spot data as the desired spot data. In this arrangement, the at least one of the plurality of update spot data indicates that at least one of the plurality of original spot data, having the same spot code as at least one of the plurality of update spot data, is changed

In this arrangement, it is relatively easy to judge whether or not the original spot data (or the desired spot data) is updated. In this case, it is preferable that the update spot data having a spot code the same as the original spot data (i.e. update spot data indicating that the desired spot data is updated) is included in the difference data 212, if the original spot data corresponding to the desired spot data is changed.

Incidentally, in the case that a plurality of original spot data is associated directly or indirectly with the original spot data corresponding to the desired spot data, it is preferable that the second acquirement device 202 acquires the update spot data having the same spot code as the associated individual original spot data.

As mentioned above, in an aspect of the data search apparatus for performing a data search on the basis of the original data 211 and the difference data 212 including a spot code, each of the plurality of update spot data has a name code indicating a name of the spot indicated by each of the update spot data. If at least one of the plurality of original spot data is changed, the name code of the update spot data having the same spot code as at least one original spot data is arranged to be blank. On the other hand, if the update spot data to be added to the original data exists, the name code of the to-be-added updated spot data is arranged not to be blank.

In this arrangement, it is relatively easy to recognize whether or not the original spot data is changed (particularly, whether or not an added spot to the original spot data exists), with reference to the name code. More specifically, now assume that the name code of the update spot data having the same spot code as the desired spot data (or the original data) acquired by the first acquirement device 201 is blank. In this case, it is relatively easy to recognize that the desired spot data (or one original spot data associated with the other original spot data corresponding to the desired spot data) is changed. On the other hand, if the second acquirement device 202 acquires the update spot data having the "not blank" name code, the update spot data can be construed as a to-be-added spot. Therefore, the data output device 203 acquires a combination of the desired spot data acquired by the first acquirement device 201 and the to-be-added update spot data. The "blank" or "blank state" herein is intended to indicate a state that information indicating a predetermined name is not recorded as the name code. The "blank" or "blank state" may be indicated by a fact that the name code does not store information (data), or may be indicated by a flag or the like. On the other hand, the "not blank" or "not blank state" herein is intended to indicate a state that information indicating a predetermined name is recorded as the name code.

Additionally, making the name code of the update spot data be the blank state (particularly, a state that information indicating a name is not recorded) brings a great advantage of reducing a data volume of the difference data as a whole. Furthermore, since the data volume can be decreased, in particular, the processing cost for searching the difference data 212 can be reduced.

In another aspect of this embodiment of the present invention, the update spot data has combination information indicating a way of combining the update spot data and the original spot data. The data output device 203 is arranged to output the desired spot data on the basis of the combination information.

According to this aspect, the update spot data included in the difference data 212 can be combined appropriately with the original spot data included in the original spot data 211. For example, even in the case that the difference add data is included mentioned above, the desired spot data (e.g. sorted or listed as appropriate) is output by the output device 203 for combining the to-be-added update spot data with the original spot data based on the difference add data.

The combination information may be a name, position, category and so on of the spot, or may include information such as an identification number.

In an embodiment of the data search method according to the present invention, the method is provided with: a first acquirement process; a second acquirement process; and a data output process. The first acquirement process includes acquiring at least one of the plurality of original spot data from the original data 211 including a plurality of original spot data each indicating a spot on a map. Particularly, the original spot data corresponding to the desired spot data indicating a desired spot may preferably be acquired. The second acquirement process includes acquiring the update spot data from the difference data 212 including at least one update spot data indicating the updated spot that is updated on the basis of the original spot data. The data output process includes combining the update spot data acquired at the second acquirement process with the original spot data acquired at the first acquirement process and outputting the combined data as the desired spot data.

According to this embodiment of the present invention, similarly to the data search apparatus in the aforementioned embodiments of the present invention, using the difference data 212 makes it possible to perform a data search such as a spot search on the basis of the original data 211 in which the latest spot information is reflected, without updating the entire original data 211. Therefore, it is possible to reduce the load of the user for updating the original data 211 for example. Additionally, it is possible for the author of the original data 211 to reduce the economical cost and the time cost for updating the original data 211.

Incidentally, this embodiment of the data search method may take various aspects, in correspondence with various aspects of embodiments of the data search apparatus.

In an embodiment of the navigation apparatus according to the present invention, as shown in FIG. 2, the navigation apparatus 300 is provided with a data search apparatus in embodiments of the present invention (i.e. a data search apparatus 200), and further with: a route search device 301; and a display output device 302. The route search device 301 is for searching a route to a spot indicated by the desired spot data outputted from the data output device 203. The display output device 302 is for displaying the route searched by the route search device 301. Additionally, a current position search device 303 for detecting a current position of a movable body on which the navigation apparatus 300 is mounted may be further employed.

According to the navigation apparatus in an embodiment of the present invention, during its operation, the current position of the navigation object is determined by its latitude and longitude that is calculated in a GPS as an example of the current position search device 303. In addition to or instead of this, for example, the current position of the navigation object may be determined by its direction, travel velocity or travel acceleration that may be obtained with an acceleration sensor, an angular velocity sensor or a velocity sensor as another example of the current position search device 303. Then, the current position can be associated with map data or the like (e.g. the original data 211 and the difference data 212) for a navigation purpose, which may be stored in/on a record medium such as a CD-ROM, DVD-ROM, a hard disk and so on, or may be downloaded via the network, so that the current position of the navigation object is displayed on the map.

Particularly in this embodiment, using the difference data 212 makes it possible to perform the navigation processing such as the route search with the latest map data. That is, even in the case that the map data (i.e. the original data 211 for example) is updated, using the map data relating to be updated (i.e. the difference data 212) makes it possible to perform appropriately the spot search as well as the navigation processing such as the route search, without replacing the entire the map data.

Conclusively, according to the navigation apparatus in this embodiment of the present invention, the navigation processing such as the route search can be achieved, with the map data (or spot data) in which the latest road condition is reflected, without updating the entire original data 211. Additionally, it is possible to reduce the load of the user for updating the map data. Furthermore, it is possible for the author of the map data to reduce the economical cost and the time cost for updating the original data 211.

Incidentally, the navigation apparatus need not necessarily have the current position search device 303 in view of displaying the latest map and searching a route to a predetermined spot. Nevertheless, if the current position search device 303 is employed, it is possible to determine the position in real time and achieve the navigation apparatus improved in its convenience for the user.

Incidentally, the navigation apparatus in embodiments of the present invention may take various aspects, corresponding to various aspects of the data search apparatus in embodiments of the present invention.

In an embodiment of the navigation method according to the present invention, the method is implemented in a navigation apparatus including the data search apparatus of the invention, and the method includes a route search process and a display output process. The route search process includes searching a route to a spot indicated by the desired spot data outputted from the data output device 203. The display output process includes displaying the route searched at the route search process.

According to the navigation method in embodiments of the present invention, similarly to the navigation apparatus in embodiments of the present invention, the navigation processing such as the route search or the like can be achieved, with the map data (or spot data) in which the latest road condition is reflected, without updating the entire original data 211.

Incidentally, the navigation method in embodiments of the present invention may take various aspects, corresponding to the navigation apparatus in embodiments of the present invention mentioned above.

In an embodiment of the data set according to the present invention, the data set includes: original data 211 including a plurality of original spot data each indicating a spot on a map; and difference data 212 including at least one update spot data indicating an updated spot that is updated on the basis of the original data 211.

According to the data set in this embodiment, similarly to the data search apparatus in embodiments mentioned above, using the difference data 212 makes it possible to perform a data search such as a spot search, on the basis of the original data 211 in which the latest spot information is reflected, without updating the entire original data 211.

Incidentally, the data set in embodiments of the present invention may take various aspects, corresponding to various aspects of the original data 211 and the difference data 212 in various aspects of the data search apparatus in embodiments of the present invention.

In an embodiment of the computer program product according to the present invention, the computer program product is for a data search purpose and for controlling a computer employed in an embodiment of the data search apparatus of the invention, and for making the computer function as at least a part of the first acquirement device 201, the second acquirement device 202 and the data output device 203.

According to the computer program product for a data search purpose in embodiments of the present invention, the data search apparatus in embodiments of the present invention mentioned above can be realized relatively easily, by reading and running the computer program product from a record medium, such as a ROM, a CD-ROM, a DVD-ROM, a hard disk and so on, storing the computer program therein/thereon, or by downloading the computer program product to the computer via the communication device and running it.

Incidentally, the computer program product in embodiments of the present invention may take various aspects, corresponding to various aspects of the data search apparatus in embodiments of the present invention mentioned above.

As discussed above, according to the data apparatus in embodiments of the present invention, there are provided with: a first acquirement device 201: a second acquirement device 202; and a data output device 203. On the other hand, according to the data search method in embodiments of the present invention, there are provided with: a first acquirement process; a second acquirement process; and a data output process. Thereby, a data search such as a spot search can be achieved, on the basis of original data 211 in which the latest spot information is reflected, without updating the entire original data 211. On the other hand, according to the navigation apparatus in embodiments of the present invention, there are provided with: a route search device 301; and a display output device 302. On the other hand, according to the navigation method in embodiments of the present invention, there are provided with: a route search process; and a display output process. Thereby, a navigation processing such as a route search or the like can be performed, on the basis of the latest map data, without updating the entire map data.

### (Examples)

Now, with reference to drawings, examples of the navigation apparatus including the data search apparatus according to the present invention will be discussed.

### (Fundamental Structure)

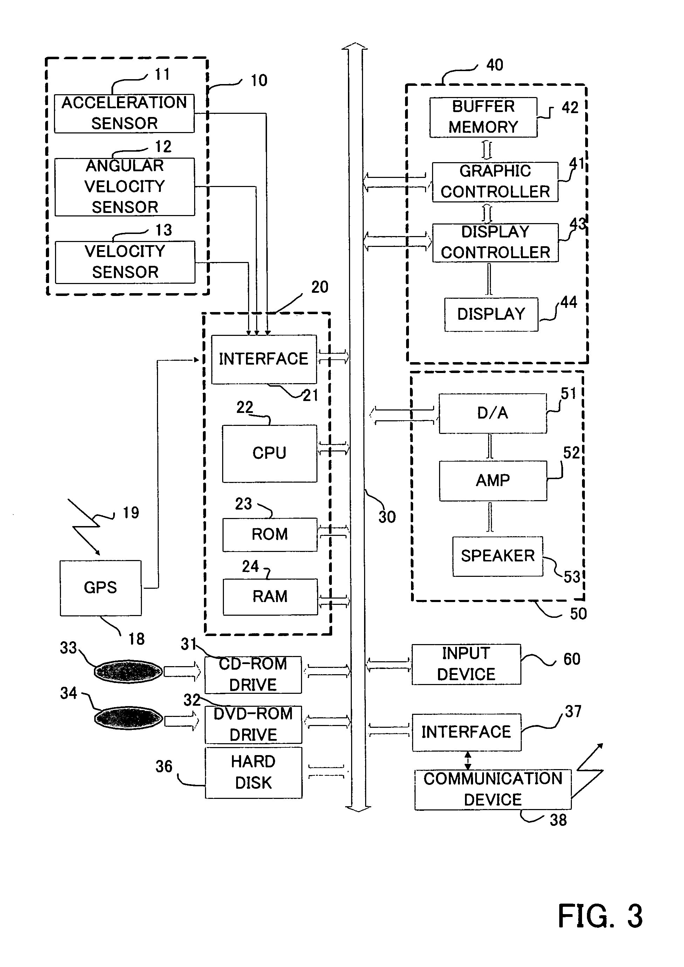

Firstly, with reference to FIG. 3, a fundamental structure of an example of the navigation apparatus including the data search apparatus according to the present invention will be discussed. FIG. 3 is a block diagram illustrating a structure of the navigation apparatus in this example.

As shown in FIG. 3, the navigation apparatus 1 is provided with: a sensor portion 10; a GPS receive portion 18; a system controller 20; a data bus 30; a CD-ROM drive 31; a DVD-ROM drive 32; a hard disk 36; a video output portion 40; an audio output portion 50; an input device 60; and a communication device 38.

The sensor portion 10, which is for sensing information about a movement of a navigation object (i.e. for example mobile body such as a vehicle or automobile) itself, is provided with: an acceleration sensor 11; an angular velocity sensor 12; and a velocity sensor 13. The acceleration sensor 11 is for sensing an acceleration of the navigation object, and is capable of further calculating a velocity from the sensed acceleration. The angular velocity sensor 12 is for sensing an angular velocity of the navigation object. The velocity sensor 13 is for sensing a velocity of the navigation object.

The GPS receive portion 18 is capable of identifying a current position of the navigation object, by receiving information in radio wave 19 from GPS satellites, for example by means of a receiver or the like.

The system controller 20, which is for controlling entirely the navigation apparatus 1, is provided with: an interface 21; a CPU 22; a ROM 23 and a RAM 24. The interface 21 transfers data with the sensor portion 10 and the GPS receive portion 18, and outputs the received data to the CPU 22 or the like. The CPU 22 identifies the current position of the navigation object, on the basis of the data inputted via the interface 21. The CPU 22 performs a computation or arithmetic processing for controlling entirely the navigation apparatus 1. Furthermore, the CPU 22 controls the CD-ROM drive 31, the DVD-ROM drive 32 or the hard disk 36 as mentioned below, to perform a navigation processing on the basis of map data (e.g. original data or difference data) read from a CD-ROM 33, a DVD-ROM 34 or the hard disk 36, otherwise received at the communication device 38. The ROM 23, in which a microprogram or the like is recorded, defines an operation of the system controller 20. The RAM 24, which may include a volatile semiconductor memory such as a DRAM, a SDRAM or the like, is used as a record medium on/in which data is recorded during the operation of the CPU 22.

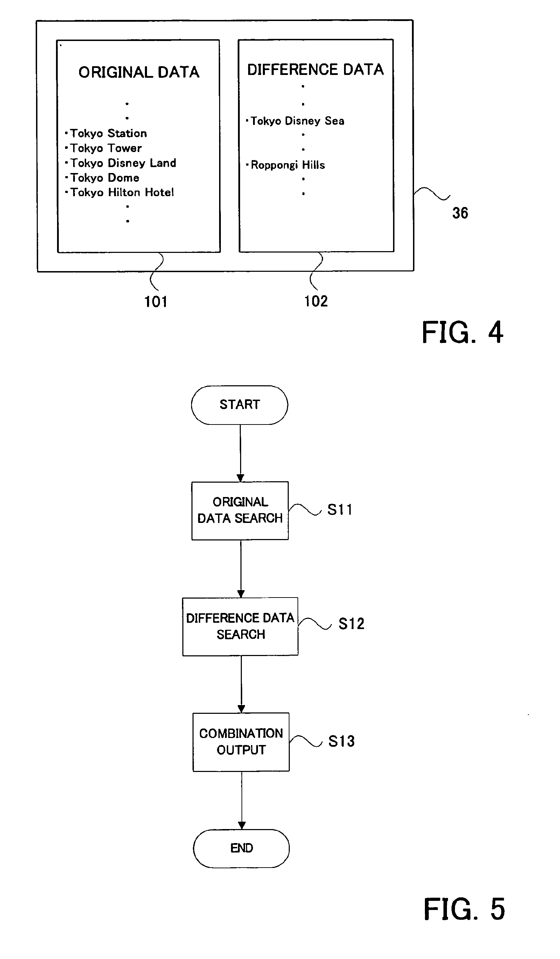

Particularly in this example, the data search apparatus mentioned above is presented due to the operation of the system controller 20. That is, the data search apparatus may be realized in a program operable on the CPU 22 for example, or in a hard wired circuit such as an IC chip or the like for example. Incidentally, the detail operation thereof will be discussed later (see FIG. 4).

The data bus 30 is used for transferring data respectively among the system controller 20, the CD-ROM drive 31, the DVD-ROM drive 32, the hard disk 36, the video output portion 40, the audio output portion 50, the input device 60, and the interface 37.

The CD-ROM drive 31 or the DVD-ROM drive 32 is a device for reading the CD-ROM 33 or the DVD-ROM 34, on/in which map data including original data or difference data is stored.

The hard disk 36 stores the map data, instead of the aforementioned CD-ROM 33 or DVD-ROM 34, and reads the map data, if needed, under control of the CPU 22.

The video output portion 40 displays a road condition or a route guidance, in response to the navigation processing, under control of the control portion 20, or displays a screen for inputting an instruction from the outside via the input device 60. The video output portion 40 is provided with: a graphic controller 41; a buffer memory 42; a display control portion 43; and a display 44. The graphic controller 41, which may include a microcomputer or the like, is for controlling entirely the display processing. The buffer memory 42, which may include a semiconductor memory such as a DRAM or the like, stores video data to be displayed, and inputs/outputs the video data, in accordance with an input/output instruction of the graphic controller 41. The display control portion 43 controls the display 44 and performs the display processing, under control of the graphic controller 41. The display 44, which may include an LCD (Liquid Crystal Display) device, a CRT (Cathode Ray Tube) display or the like, actually displays the video data.

The audio output portion 50, which is provided with: a digital-analog converter 51; an amplifier 52; and a speaker 53, outputs sound, in response to the navigation processing, under control of the system controller 20. The digital-analog converter 51 converts a digital audio signal outputted within the navigation apparatus 1 into an analog audio signal. The amplifier 52 amplifies the converted analog audio signal and controls the output level. The speaker 53 converts the amplified analog audio signal outputted from the amplifier 52 into sound, and outputs the sound.

The input device 60, which may include a remote controller, a controller, a touch panel and so on, receives an external instruction to the navigation apparatus 1.

The interface 37 controls an input/output between each component of the navigation apparatus 1 and data that may be transferred via the data transfer by the communication device 38 with a data center.

The communication device 38, which is provided with a transceiver or the like (e.g. a modem, a DSU, a router, an antenna, or a radio wave transceiver and so on) capable of transmitting and receiving information via a wired or unwired communication line, may transmit and receive necessary information, for example by performing a data transfer to the data center.

### (Operational Principle of Navigation Apparatus)

Next, with reference to FIG. 4 to FIG. 7, an operational principle of the navigation apparatus including the data search apparatus according to the present invention will be discussed.

### (1) Exemplary Operation

Firstly, with reference to FIG. 4 and FIG. 5, an operational principle of the navigation apparatus 1 in this example will be discussed. FIG. 4 is a schematic view conceptually illustrating original data and difference data that are a part of map data provided for the navigation apparatus in this example. FIG. 5 is a flow chart illustrating an operational flow of searching for spot data on the basis of the original data and the difference data shown in FIG. 4.

As shown in FIG. 4, in the navigation apparatus 1 in this example, the original data 101 and the difference data 102 are recorded in/on the hard disk 36.

The original data 100 includes spot data indicating a predetermined spot used for the navigation processing. Particularly, predetermined spot data is preferably acquired, by searching (or retrieving) text data indicating a predetermined spot name, for example. For example, with regard to the original data shown in FIG. 4, it is preferable to acquire spot data indicating "Tokyo Tower", "Tokyo Dome", "Tokyo Station" and so on (e.g. text information indicating a proper noun or general noun of individual facility, or position information indicating the latitude and longitude, etc.), by searching the original data with text data "Tokyo". Alternatively, it is preferable to acquire spot data indicating "Tokyo Tower" (e.g. position information indicating latitude, longitude and so on, or touristic information indicating opening hours, an entrance fee and so on, etc.), by searching the original data with text data "Tokyo Tower".

The difference data 102 includes updated spot data that is updated from a reference time point, in which the reference time point is defined as a time point when the original data is generated. For example, it preferably includes information about a new spot constructed or arisen after the reference time point. Furthermore, the difference data 102 preferably has the same data format as the original data 101.

Next, the operation of the navigation apparatus 1 for searching spot data on the basis of the original data 101 and the difference data 102 shown in FIG. 4 will be discussed, with reference to FIG. 5. Incidentally, in FIG. 5, an operation of selecting a predetermined spot is illustrated, in the case that the user sets the predetermined spot as a destination, during the usual navigation processing (e.g. a route search or route guidance).

As shown in FIG. 5, under control of the system controller 20, the predetermined spot data is searched (step S11), in the original data 101 that may be recorded in/on the hard disk 36. In this case, the search is preferably performed, in response to a user's (the user of the navigation apparatus 1) request that may be inputted via the input device 60. More specifically, if the user inputs an instruction of performing the search with text data "Tokyo" as a keyword, it is preferable to search the original data 101 for spot data including the text data "Tokyo".

On or during the search of the original data at the step S11, the difference data 102 is searched for the predetermined spot data (step S12). In this case, similarly to the step S11, it is preferable to perform the search in response to the user's request.

On this occasion, spot data including the keyword to be displayed and/or outputted may be increased or decreased in real time, in response to that the user inputs or deletes one character or letter of keyword.

Then, under control of the system controller 20, the search result at the step S11 and the search result at the step S12 are combined and then displayed/outputted on the display 44 (step S13). For example, if both the original data 101 and the difference data 102 shown in FIG. 4 are searched with a keyword "Tokyo" as mentioned above, (i) spot data in the original data 101, indicating "Tokyo Station", "Tokyo Tower", "Tokyo Disney Land", "Tokyo Dome" and "Tokyo Hilton Hotel" respectively, and (ii) spot data in the difference data 102, indicating "Tokyo Disney Sea" are displayed and/or outputted as a list. Alternatively, if the user performs the search with a keyword "Tokyo Disney", (i) spot data in the original data 101, indicating "Tokyo Disney Land", and (ii) spot data in the difference data 102, indicating "Tokyo Disney Sea" are displayed and/or outputted as a list. Alternatively, if the user performs the search with a keyword "Roppongi Hills", spot data in the difference data 102, indicating "Roppongi Hills" is displayed and/or outputted.

Therefore, the user can check the latest spot data including the keyword that is inputted by the user himself/herself. On this occasion, using the difference data 102 makes it possible to search for the latest spot data, without a regenerating of the original data 101.

Thereby, even if a spot is constructed or arisen after the original data 101 is generated, the spot data indicating the spot can be handled relatively easily, in the same way as the spot data in the original data 101, by employing the difference data 102. If the difference data 102 is acquired, the latest spot data may be advantageously searched, without the rewriting the entire original data 101. In addition, since the original data 101 (especially the entire original data 101) is not necessarily to be regenerated to add new spots, it is relatively easy to take the new spots with a low cost for the author by whom the spot data is generated.

### (2) Exemplary Variant

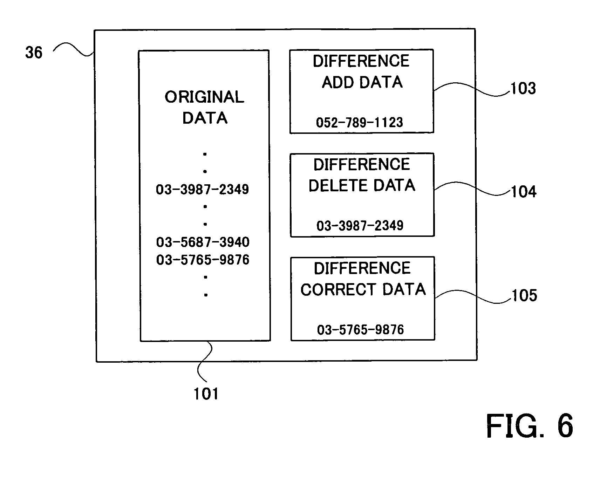

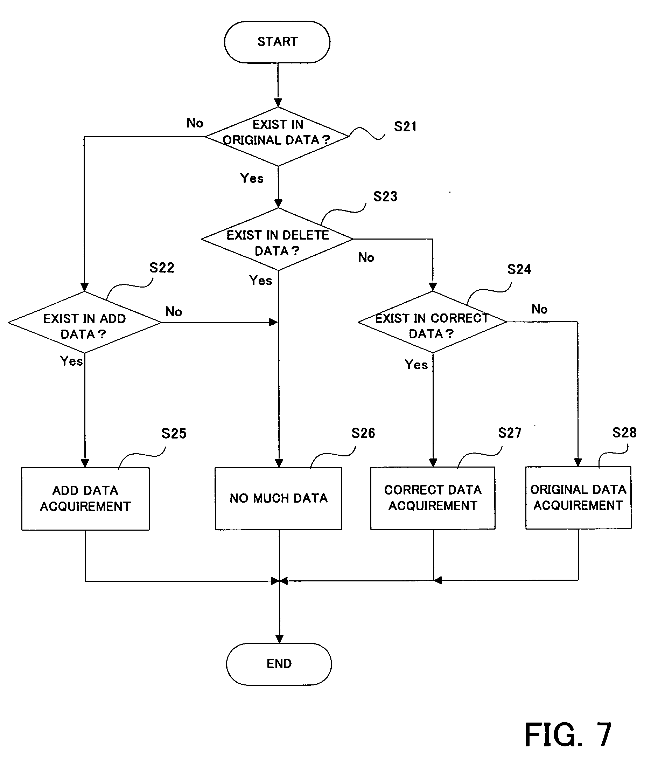

Next, with reference to FIG. 6 and FIG. 7, an exemplary variant of the navigation apparatus 1 in this example will be discussed. FIG. 6 is a schematic view conceptually illustrating original data, difference add data, difference delete data and difference correct data that are a part of map data provided for the navigation apparatus 1 in this example. FIG. 7 is a flow chart illustrating an operational flow of searching the original data, the difference add data, the difference delete data and the difference correct data shown in FIG. 6 for spot data. Incidentally, in FIG. 6 and FIG. 7, the explanation is made to a case of searching for a predetermined spot (spot data) identified a telephone number, on the basis of the telephone number inputted as a keyword for the search by the user. However, this variant is not limited to the search with the telephone number, and is applicable to a search of a predetermined spot.

As shown in FIG. 6, the original data 101, the difference add data 103, the difference delete data 104 and the difference correct data (or difference change data) 105 are recorded in the hard disk 36.

The original data 101 includes therein a telephone number to identify spot data. And it is arranged to identify predetermined spot data on the basis of the telephone number.

The difference add data 103 includes spot data added to indicate a new spot arisen after the reference time point that is defined as a time point when the original data is generated. More specifically, a telephone number to identify the added spot data indicating the new spot after the reference time point is recorded.

The difference delete data 104 includes spot data deleted from the original data 101, indicating a spot disappeared or municipality disappeared due to the merger, after the reference time point that is defined as a time point when the original data is generated. More specifically, a telephone number to identify spot data to be deleted, after the reference time point, from spot data in the original data 101 is recorded.

The difference correct data 105 includes spot data corrected (or changed) from the contents of the original data 101, indicating a merged municipality or changed address caused or arisen after the reference time point. More specifically, a telephone number to identify spot data, which is corrected among spot data in the original data 101 and to identify the corrected spot data after the correction (or change) is reflected.

Next, an exemplary operation with various data shown in FIG. 6, in the case that predetermined spot data is searched on the basis of a telephone number, will be discussed, with reference to FIG. 7.

As shown in FIG. 7, under control of the system controller 20, the original data 101 is searched and judged whether or not the telephone number that may be inputted by the user via the input device 60 exists in the original data 101 (step S21).

As a result of the judgement at the step S21, if the telephone number inputted by the user does not exist in the original data 101 (step S21: No), the difference add data 103 is searched and judged whether or not the telephone number inputted by the user exists (step S22).

As a result of the judgement at the step S22, if it does not exist in the difference add data 103 (step S22: No), the system controller 20 for example judges that spot data identified by the inputted telephone number does not exist. Therefore, under the judgement that the spot data does not exist, this judgement may be displayed/outputted on the display 44 for example (step S26).

On the other hand, as a result of the judgement at the step S22, if it exists in the difference add data 103 (step S22: Yes), the system controller 20 for example judges that spot data identified by the inputted telephone number is newly added spot data. Therefore, the spot data identified by the telephone number is acquired from the difference add data 103, and information indicated by the spot data is displayed/outputted on the display 44 (step S25).

On the other hand, as a result of the judgement at the step S21, if the telephone number inputted by the user exists in the original data 101 (step S21: Yes), it is further judged whether or not the inputted telephone number exists in the difference delete data 104 (step S23).

As a result of the judgement at the step S23, if it exists in the difference delete data 104 (step S23: Yes), the system controller 20 for example judges that spot data identified by the inputted telephone number is deleted. Therefore, under the judgement that the spot data does not exist, this judgement may be displayed/outputted on the display 44 (step S26).

On the other hand, as a result of the judgement at the step S23, if it does not exist in the difference delete data 104 (step S23: No), it is judged whether or not the inputted telephone number exists in the difference correct data 105 (step S24).

As a result of the judgement at the step S24, if it exists in the difference correct data 105 (step S24: Yes), the system controller 20 for example judges that spot data identified by the inputted telephone number is corrected. Therefore, the spot data identified by the telephone number from the difference correct data 105, and information indicated by the spot data is displayed/outputted on the display 44 (step S27).

On the other hand, as a result of the judgement at the step S24, if it does not exists in the difference correct data 105 (step S24: No), the system controller 20 for example judges that spot data identified by the inputted telephone number is not deleted or corrected. Therefore, the spot data identified by the telephone number is acquired from the original data 101, and information indicated by the spot data is displayed/outputted on the display 44 (step S28).

More specifically, for example, if a telephone number inputted by the user is "03-5687-3940", it exists in the original data 101, but it does not exist in the difference delete data 104 and the difference correct data 105. Therefore, the navigation apparatus 1 in this example uses spot data identified by the original data 101 as the latest spot data.

For example, if a telephone number inputted by the user is "03-3987-2349", it exists in the original data 101, and also in the difference delete data 104. Therefore, the navigation apparatus 1 in this example does not use the spot data identified by the original data 101 for the navigation processing, under the judgement that the spot data is deleted.

For example, if a telephone number inputted by the user is "03-5765-9876", it exists in the original data 101 and also in the difference correct data 105. Therefore, the navigation apparatus 1 in this example uses the spot data identified by the difference correct data 105 as the latest spot data, under the judgement that the spot data identified by the original data 101 is corrected.

For example, if a telephone number inputted by the user is "052-789-1123", it does not exist in the original data 101, but it exists in the difference add data 103. Therefore, the navigation apparatus 1 in this example uses the spot data identified by the difference add data 103 as the latest spot data, under the judgement that new spot data is added to the original data 101.

Thereby, it is relatively easy to take the changed spot data due to a geographical change after the generation of the original data 101, without an regenerating of the original data 101 (the entire original data 101), or without a modification of the original data 101. Additionally, it brings a great advantage of taking appropriately an addition, a deletion or a correction of the spot data, on the basis of the original data 101.

Conclusively, the navigation apparatus including the data search apparatus according to the present invention can use the difference data 102 (or the difference add data 103, the difference delete data 104, the difference correct data 105) and thereby handle relatively easily a new spot data indicating a new spot appeared after the generation of the original data 100 in the same manner as the spot data in the original data 101. If the difference data 102 is acquired, the latest spot data can be advantageously searched, without regenerating the entire original data 101. On the other hand, the original data 101 is not necessarily to be regenerated to add a new spot, also for the author by whom the spot data is generated, it is relatively easy to take the new spot with a low cost.

### (Specific Example of Operation of Navigation Apparatus)

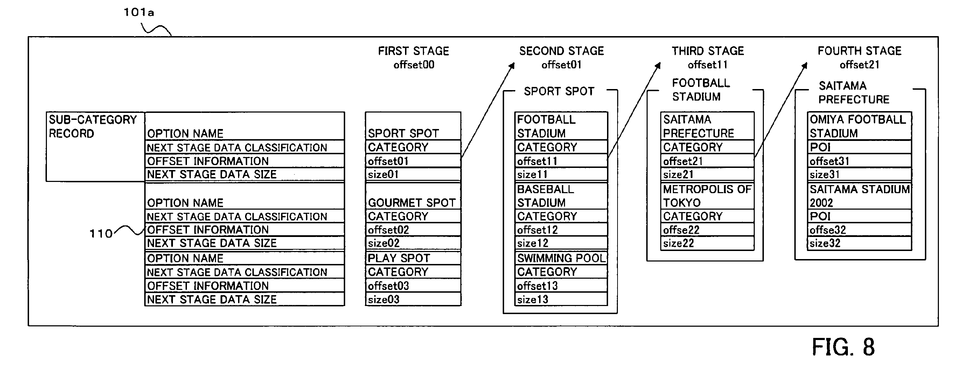

Next, with reference to FIG. 8 to FIG. 19, more specific operation of the navigation apparatus in this example will be explained in detail. Incidentally, in the following explanation, components the same as the aforementioned examples and variants thereof carry the same numerals and the detail explanation of them is omitted.

### (First Specific Example)

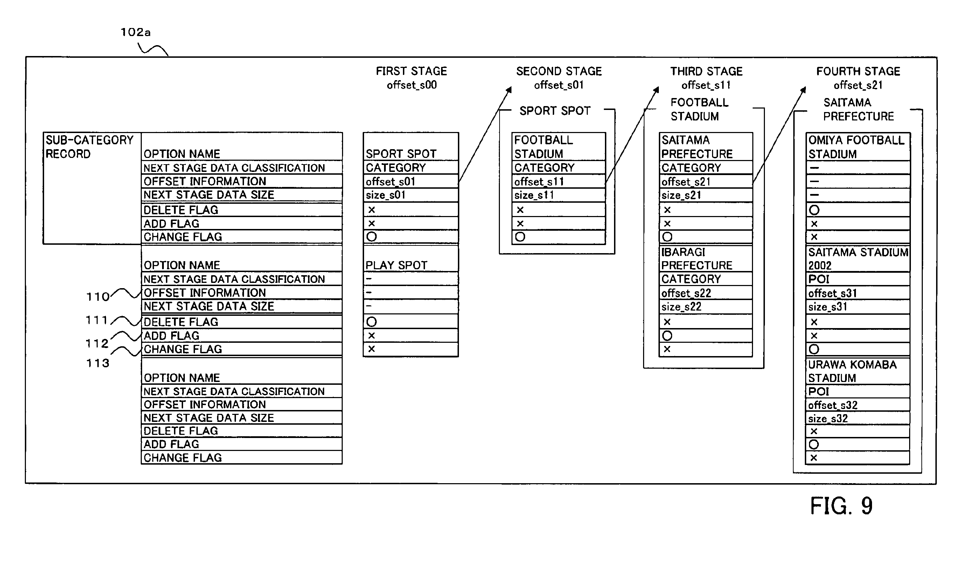

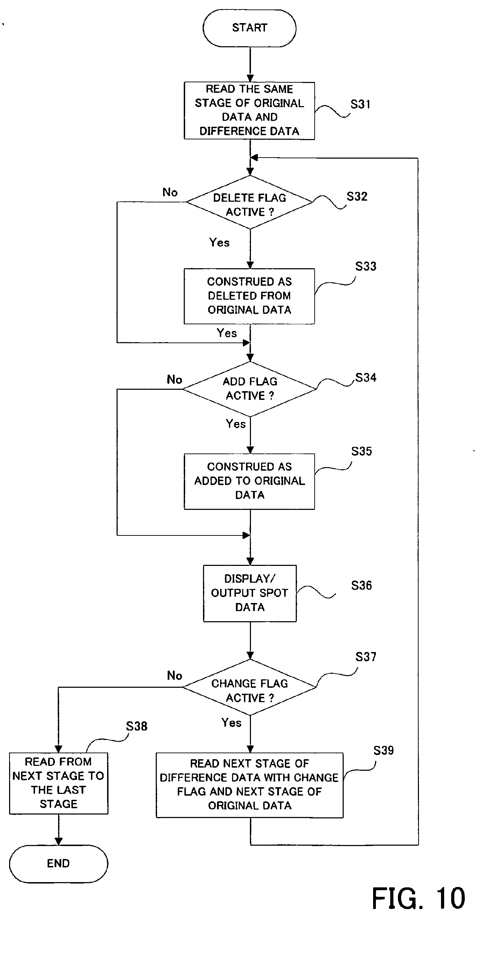

Firstly, with reference to FIG. 8 to FIG. 10, the first specific example will be explained. FIG. 8 is a view conceptually illustrating the original data used for the navigation apparatus in the first specific example. FIG. 9 is a view conceptually illustrating the difference data used for the navigation apparatus in the first specific example. FIG. 10 is a flow chart illustrating an operational flow of searching the spot data on the basis of the original data and the difference data shown in FIG. 8 and FIG. 9. Incidentally, in the first specific example, individual spots are categorized into a hierarchy structure by spot group having a common feature such as a genre, region and so on. Spot data is searched on the basis of the hierarchy structure, in the order from an upper stage of the hierarchy to a lower stage of the hierarchy.

As shown in FIG. 8, the original data 101a is recorded in the hard disk 36. In the first specific example, spot data having a hierarchy as shown in FIG. 8 is recorded as the original data 101.

More specifically, a set of spot data includes four records indicated by "option name", "next stage data classification", "offset information" and "next stage data size". The original data 101a includes a plurality of such a spot data set. Genre data indicating a rough category (or classification) of spot is recorded as the spot data of the first stage. Category data indicating a more detail category of spot is recorded as the spot data of the second stage that is a lower (or more detailed) category of the genre data. For example, below "sport spot" as the genre data of the first stage, the category data made of "football stadium", "baseball stadium" and "swimming pool" is recorded. Area data indicating a location or site where the spot exists (e.g. a prefectural location) is recorded as the spot data of the third stage that is a lower category of the category data. For example, below "football stadium" as the category data of the second stage, the area data made of "Saitama prefecture" and "Metropolis of Tokyo" is recorded. Contents data indicating the detailed information of the spot itself is recorded as the spot data of the fourth stage that is a lower category of the area data. Incidentally, the category name herein is not of fixed. Furthermore, the hierarchy may be inter-changeable, such that, for example, the category data is defined as the spot data of the first stage, the area data is defined as the spot data of the second stage, and contents data is defined as the spot data of the third stage. Individual spot data has preferably stage information to indicate to which stage the spot data is belonged.

The genre data, the category data, the area data and the contents data as mentioned above are associated with individually by the offset information 110. The offset information 110 may identify a position or positions of another or other spot data associated with one spot data, for example it may indicate a record position or a record address of another or other spot data.

Additionally, individual spot data has information indicating "option name", "next stage data classification", and "next stage data size". The "option name" indicates a name of spot data. The "next stage data classification" indicates a data class of a stage (i.e. the next stage) below the spot data. For example, if the "next stage data classification" indicates "category", spot data in the next stage should indicate a category (for example rough or detailed category) of the spot data. Alternatively, if the "next stage data classification" indicates "POI (Position of Information)", the next stage spot data should indicate the detail information of the spot data. Incidentally, a location of the spot (e.g. latitude and longitude information) or the like is preferably recorded in the detail information identified by the POI. The "next stage data size" indicates a data size of a stage below the spot data.

Incidentally, the hierarchy of spot data is a logical data structure, and is not necessarily recorded in a physical level format having such a structure. That is, insofar as the hierarchy structure is achieved by the offset information 110, it may be recorded at any address in the hard disk 36, or may be recorded in/on a plurality of hard disks 36, CD-ROM's 33 or DVD-ROM's 34.

On the other hand, as shown in FIG. 9, also the difference data 102a has a hierarchy structure similarly to the original data 101a. That is, genre data, category data, area data and contents data are recorded in association with the offset information 110.

Particularly in the difference data 102a, individual spot data has a delete flag 111, an add flag 112 and a change flag (or correct flag) 113.

The delete flag 111 indicates that the spot data is deleted from the original data 101a. For example, spot data indicating "play spot" of the first stage with an active delete flag 111 is judged as deleted from the original data 101a by the navigation apparatus 1.

The add flag 112 indicates that the spot data is newly added to the original data 101a. For example, spot data indicating "Urawa Komaba Stadium" of the fourth stage with an active add flag 112 is judged as newly added to the original data 101a by the navigation apparatus 1.

The change flag 113 indicates that one or more spot data of the next stage associated with the spot data of this stage by the offset information 110 (or one or more spot data of further next stage associated with the next stage spot data) are changed. For example, spot data indicating "sport spot" of the first stage with an active change flag 113 is judged as changed from at least one of the spot data of the next (or further next) stage associated with this sport spot by the navigation apparatus 1.

It is preferable that spot data other than spot data deleted from, or added to, or changed from the original data 101a is not recorded in the difference data 102a. However, even if such spot data is recorded, a satisfactory benefit of this example can be obtained. For example the spot data indicating "genre spot", in which the added spot data, the deleted spot data and the changed spot data are not exist, is not recorded in the difference data 102a in FIG. 9, but it may be recorded.

Next, with reference to FIG. 10, an exemplary operation for the spot search performed in the navigation processing on the basis of the original data 101a shown in FIG. 8 and the difference data 102a shown in FIG. 9 will be discussed. Incidentally, in the first to fourth specific examples, spot data is arranged to be selected and searched by a scroll menu or the like, for example.

Firstly, under control of the system controller 20, the original data 101a and the difference data 102a in the same stage are read (step S31). In this case, the read spot data may be stored in the RAM 24, for example. Furthermore, the stage to be read may be designated by a user's instruction via the input device 60. Alternatively, the stage to be read at first may be predetermined in default. It is judged whether or not the delete flag 111 is active, with reference to the difference data 102a (step S32). That is, it is judged whether or not spot data with an active delete flag 111 exists.

As a result of the judgement at the step S32, if the delete flag 111 is judged as active (step S32: Yes), the spot data with the active delete flag 111 is construed as deleted from the original data 101a (step S33). In this case, the system controller 20 for example may delete the spot data from spot data in the original data 101a read on the RAM 24. Then, the process goes to the steps S34.

On the other hand, as a result of the judgement at the step S32, if the delete flag 111 is judged as inactive (step S32: No), the system controller 20 for example may judge that the deleted spot data does not exist in the read stage. Then, the process goes to the step S34.

Next, it is judged whether or not the add flag 112 is active, with reference to the difference data 102a (step S34). That is, it is judged whether or not various data with an active delete flag 112 exist.

As a result of the judgement at the step S34, if the add flag 112 is judged as active (step S34: Yes), the data with an active add flag 112 is construed as spot data newly added to the original data 101a (step S35). In this case, the added spot data may be additionally recorded in the original data 101a read on the RAM 24. Then, the process goes to the step S36.

On the other hand, as a result of the judgement at the step S34, if the add flag 112 is judged as inactive (step S34: No), the system controller 20 for example may judge that spot data newly added to the stage does not exist. Then, the process goes to the step S36.

Then, the updated spot data that is subjected to the deletion from or addition to the original data 101a is displayed/outputted on the display 44 (step S36). On this occasion, the spot data on the RAM 24 may be displayed/outputted. For example, according to the original data 101a and the difference data 102a, "sport spot" and "gourmet spot" are displayed/outputted on the display 44 so that the user can select "sport spot" and "gourmet spot", while "play spot" with the delete flag is not displayed/outputted. Then, the navigation apparatus 1 waits for the user's next instruction.

Then, if the user gives the next instruction, i.e. selects the next spot data, it is judged whether or not the change flag 113 of the next spot data that may be selected by the user is active, with reference to the difference data 102a read at the step S31 (step S37).

As a result of the judgement at the step S37, if the change flag 113 is judged as inactive (step S37: No), the system controller 20 for example may judge that any spot data is deleted from or added to the original data 101a in this and the lower (next) stage. Then, the process goes to the step S38. For example, if the user selects "gourmet spot", the original data 101a can be construed as the latest spot data, with regard to data in the lower stages associated with the "gourmet spot", since the change flag 113 is not active.

Then, the system controller 20 performs the spot search on the basis of spot data recorded in the original data 101a, until a desired spot data (e.g. spot data indicating "POI" as the next stage data classification) is searched according to the user's instruction or selection (step S38).

On the other hand, as a result of the judgement at the step S37, if the change flag 113 is judged as active (step S37: Yes), the spot data of the next stage below the stage in which the spot data with the active change flag 113 is read from the difference data 102a (step S39). On this occasion, the spot data of the next stage is read also from the original data 101a. For example, if the user selects "sport spot", the spot data of the second stage in the original data 101a and the spot data of the second stage in the difference data 102a are read, since the change flag 113 of the "sport spot" is active. Then, with regard to the original data 101a and the difference data 102a read at the step S39, a series of steps from S31 to S37 is repeated.

More specifically, for example, if the user selects spot data indicating "football stadium" with an active change flag 113, the spot data of the third stage in the original data 101a and the spot data of the third stage in the difference data 102a are further read. On this occasion, "Ibaragi prefecture" with an active add flag 112 is displayed/outputted on the display 44 so that the user can select "Ibaragi prefecture", as well as "Saitama prefecture" and "Metropolis of Tokyo". If the user selects "Saitama prefecture" with an active change flag 113, the spot data of the four stage in the original data 101a and the spot data of the four stage in the difference data 102a are read. On this occasion, "Urawa Komaba Stadium" with an active add flag 112 is displayed/outputted on the display 44 so that the user can select "Urawa Komaba Stadium", as well as "Saitama Stadium 2002", while "Omiya Football Stadium" with an active delete flag 111 is not displayed/outputted. If the user selects "Saitama Stadium 2002", the detail information about the spot data (e.g. latitude and longitude information) is acquired, on the basis of "POI" indicated by "next stage data classification" of the spot data indicating the "Saitama Stadium 2002".

Conclusively, according to the first specific example, it is relatively easily to perform the spot search with the latest spot data based on the difference data 102a, with reference to the delete flag 111, the add flag 112 and the change flag 113. Additionally, using the difference data 102a in a data form substantially the same as the original data 101a makes it possible to perform the spot search appropriately with the latest spot data, without affecting the navigation processings.

### (Second Specific Example)

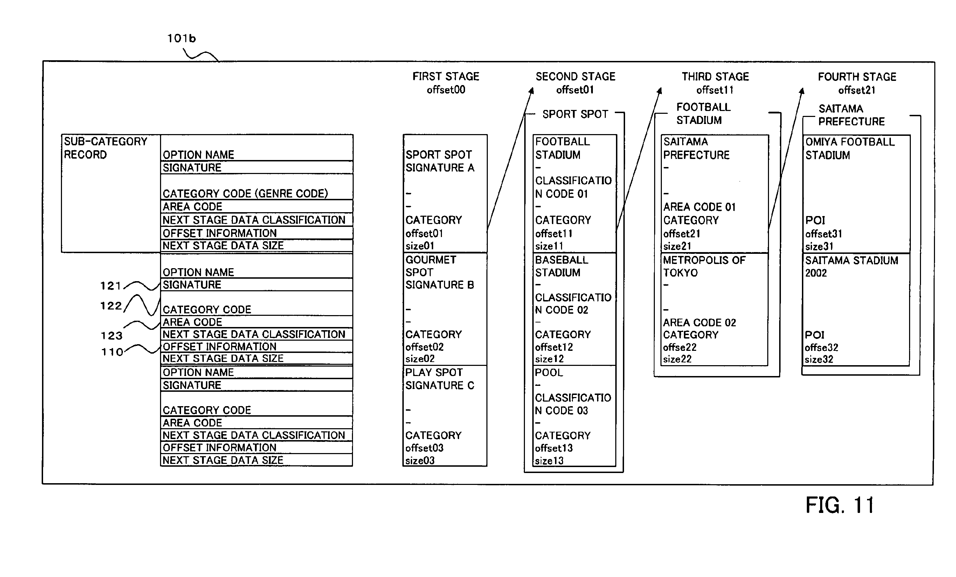

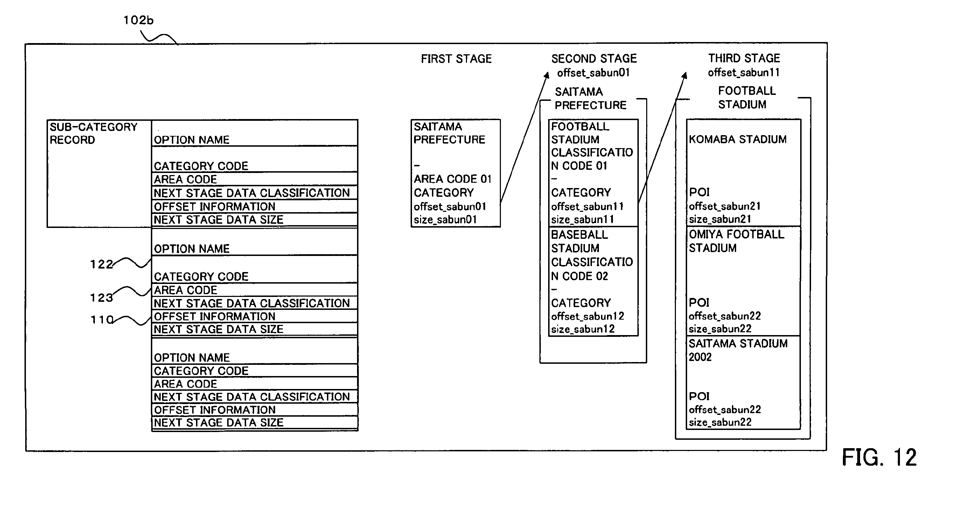

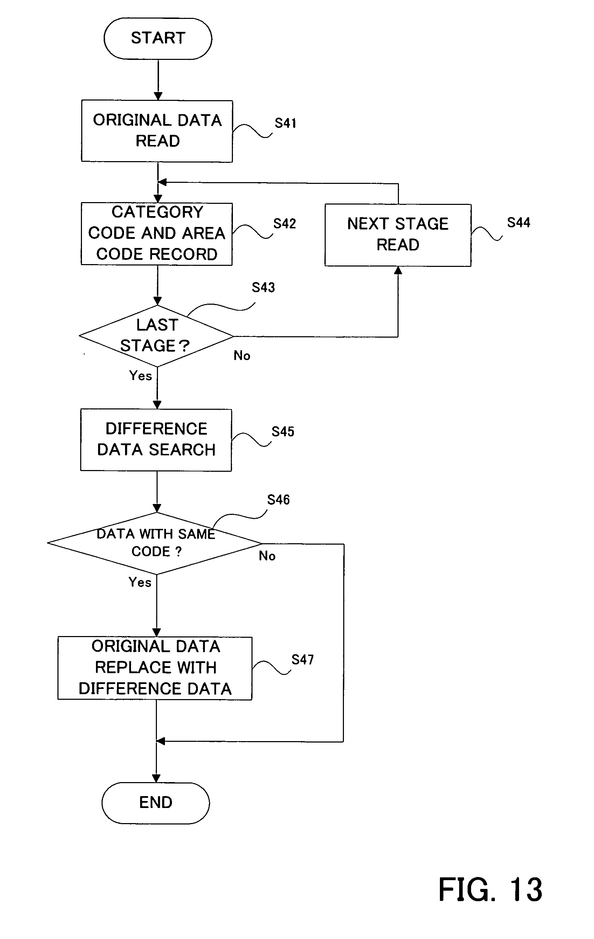

Next, with reference to FIG. 11 to FIG. 13, the second specific example will be discussed. FIG. 11 is a view conceptually illustrating the original data used for the navigation apparatus in the second specific example. FIG. 12 is a view conceptually illustrating the difference data used for the navigation apparatus in the second specific example. FIG. 13 is a flow chart illustrating an operational flow of searching spot data on the basis of the original data and the difference data shown in FIG. 11 and FIG. 12. Incidentally, in the second specific example, similarly to the first specific example mentioned above, individual spots are categorized into a hierarchy structure by spot group having a common feature such as a genre, region and so on. Spot data is searched on the basis of the hierarchy structure, in the order from an upper stage of the hierarchy to a lower stage of the hierarchy.

As shown in FIG. 11, the original data 101b in the second specific example has a data structure substantially the same as the first specific example. Particularly in the second specific example, spot data includes a signature 121, a category code 122 and an area code 123, as an example of the "spot code" according to the present invention.

The signature 121 indicates an identifier that is assigned specifically to each genre data, for identifying a plurality of groups of genre data from each other. For example, the signature 121 "SPRT" may be assigned to the sport spot, while the signature 121 "GRME" may be assigned to the gourmet spot. However, not limited to the above exemplary signature, a predetermined numeral, character (letter), symbol and so on may be employed as the signature 121, insofar as it allows identification among genre data. Then, the system controller 20 can recognize whether the genre data is the sport spot or the gourmet spot for example, with reference to the signature 121.

The category code 122 indicates an identifier that is assigned to each category data, for identifying a plurality of groups of the category data from each other.

The area code 123 indicates an identifier that is assigned to each area data, for identifying a plurality of groups of the area data from each other. For example, the area code 123 may be assigned to each prefecture.

On the other hand, as shown in FIG. 12, similarly to the original data 101b, the difference data 102b also includes the category code 122 and the area code 123. Incidentally, if the difference data 102b includes the genre data also, it may include the signature 121 similarly to the original data 101b.

Furthermore, spot data that can update the last stage spot data in the original data 101b is recorded, in the difference data 102b in the second specific example. For example, all the spot data of the contents data in the last stage is recorded in the difference data 102b in FIG. 12, as well as the category data and the area data associated with the contents data (e.g. spot data indicating "football stadium" and spot data indicating "Saitama Prefecture"). Then, as mentioned below, the difference data 102b is identified on the basis of the area code 123 and the category code 122, and taken into the original data 101b (see FIG. 13).

Next, with reference to FIG. 13, an exemplary operation of a spot search performed in the navigation processing on the basis of the original data 101b shown in FIG. 11 and the difference data 102b shown in FIG. 12 will be discussed.

Firstly, under control of the system controller 20, a predetermined stage of the original data 101b is read (step S41). If the signature 121, the category code 122 or the area code 123 are included in the read stage, any of these codes may be recorded on the RAM 24 or the like (step S42), and served for a search in the difference data 102b as mentioned below. Then, it is judged whether or not the stage read at the step S41 is the last stage (step S43). The judgement about the last stage may be judged by a fact whether or not "next stage data classification" of the spot data read at the step S41 is "POI". That is, if the next stage of the spot data is POI, it may be judged as the last stage, and if it is not POI, it may be not judged as the last stage.

As a result of the judgement at the step S43, if it is not judged as the last stage (step S43: No), the next stage spot data in the original data 101b is read (step S44). Then, a series of steps S42 and S43 is repeated.

On the other hand, as a result of the judgement at the step S43, if it is judged as the last stage (step S43: Yes), the difference data 102b is read (step S45). Then, it is judged whether or not spot data having the same codes as the signature 121, the category code 122 and the area code 123 recorded on the RAM 24 at the step S42 exist (step S46). That is, it is judged whether or not the spot data identified by the signature 121, the category code 122 and the area code 123 recorded at the step S42 exists in the difference data 102b.

As a result of the judgement at the step S46, if it is judged that the spot data having the same codes exists in the difference data 102b (step S46: Yes), the spot data having the same codes is then acquired, and taken into the original data 101b to replace the same stage spot data in the original data 101b (step S47).

More specifically, in the original data 101b for example, if the user selects "sport spot", "football spot" and "Saitama prefecture" in this order, "signature A", "category code 01" and "area code 01" are recorded at the step S42. Therefore, referring to the difference data 102b, it is judged that the spot data having the same area code 123 and the category code 122 (i.e. the contents data of the difference data 102b) exists. Therefore, all the contents data of the original data 101b is replaced by all the contents data of the difference data 102b. Then, "Komaba Stadium", "Omiya Football Stadium" and "Saitama Stadium 2002" are displayed/outputted on the display 44 so that the user can select "Komaba Stadium", "Omiya Football Stadium" and "Saitama Stadium 2002".

On the other hand, as a result of the judgement at the step S46, if it is judged that the spot data having the same codes does not exist in the difference data 102b (step S46: No), the spot search is performed on the basis of the original data 101b as it is.

Conclusively, according to the second specific example, similarly to the first specific example, it is relatively easy to perform the spot search with the latest spot data on the basis of the difference data 102b. Particularly in the second specific example, it is possible to select and change preferentially spot data in a certain area of a certain genre for example. Therefore, it brings a great advantage of reducing a volume of spot data to be recorded in the difference data 102b, and of performing a data reading of the difference data 102b relatively easily and quickly.

### (Third Specific Example)

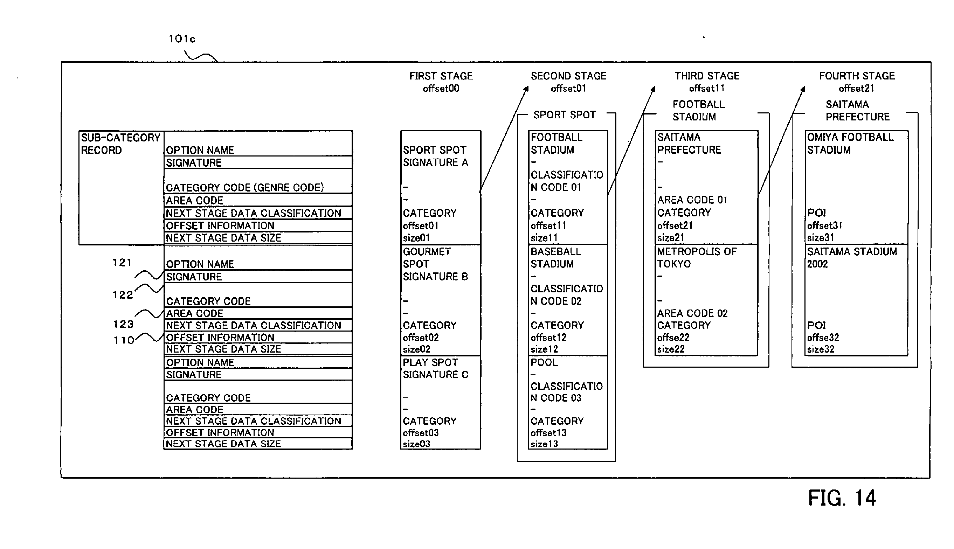

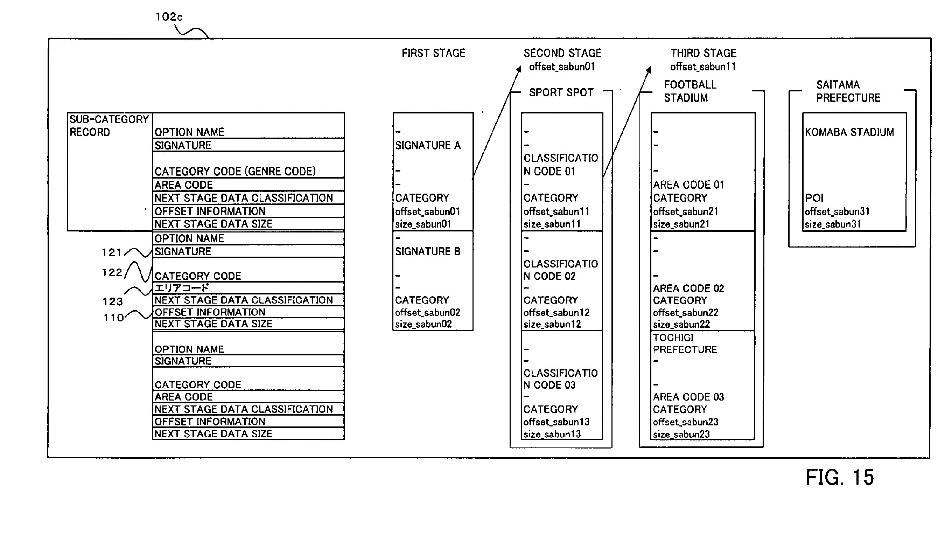

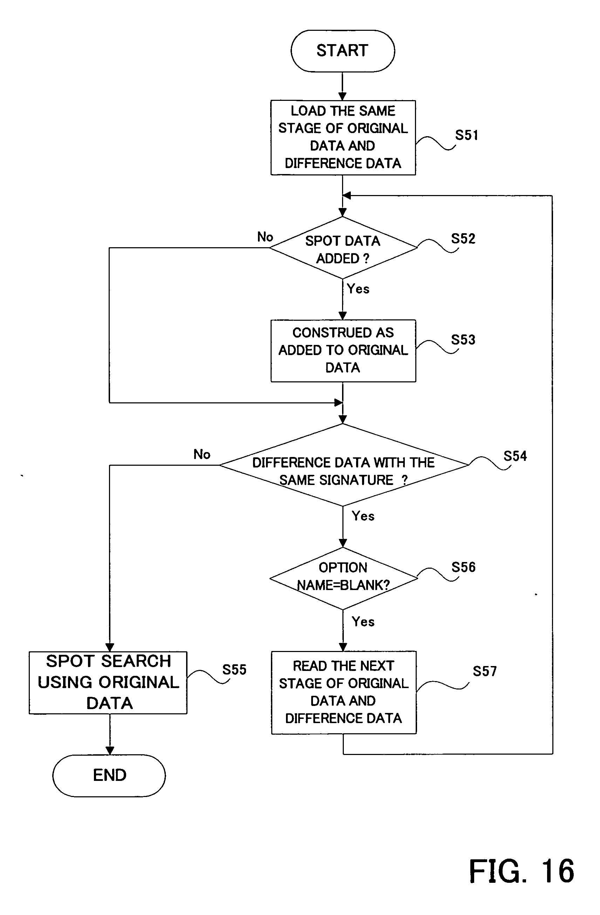

Next, with reference to FIG. 14 to FIG. 16, the third specific example will be discussed. FIG. 14 is a view conceptually illustrating the original data used for the navigation apparatus in the third specific example. FIG. 15 is a view conceptually illustrating the difference data used for the navigation apparatus in the third specific example. FIG. 16 is a flow chart illustrating an operational flow of searching spot data on the basis of the original data and the difference data shown in FIG. 14 and FIG. 15 respectively. Incidentally, in the third specific example, similarly to the first and second specific examples mentioned above, individual spots are categorized into a hierarchy structure by spot group having a common feature such as a genre, region and so on. Spot data is searched on the basis of the hierarchy structure, in the order from an upper stage of the hierarchy to a lower stage of the hierarchy.

As shown in FIG. 14, the original data 101c in the third specific example has the same data structure as the original data 101b in the second specific example.

As shown in FIG. 15, the difference data 102b in the third specific example also has the same data structure as the difference data 102b in the second specific example. Particularly in the third specific example, there is spot data whose "option name" is a blank area. The spot data whose "option name" is a bank area means that spot data in a stage below the present spot data are changed. On the other hand, spot data whose "option name" includes a spot name indicates newly added spot data. Thus, describing only the name of the added spot data and making blank for the name of the spot data including changed subsidiary stage data make it possible to reduce the data volume of the difference data 102c.

Next, an exemplary operation of a spot search performed in the navigation processing on the basis of the original data 101c shown in FIG. 14 and the difference data 102c shown in FIG. 15 will be discussed, with reference to FIG. 16.

Firstly, under control of the system controller 20, the original data 101c and the difference data 102c of the same stage are read (step S51).

Then, with reference to difference data 102c read at the step S51, it is judged whether or not spot data to be added to the read stage exists (step S52). In this case, for example, if spot data whose "option name" is not blank and is described as a certain spot name exists, it is judged that the spot data to be added exists.

As a result of the judgement at the step S52, if it is judged that the spot data to be added does not exist (step S52: No), the process goes to the step S54.

On the other hand, as a result of the judgement at the step S52, if it is judged that the spot data to be added exists (step S52: Yes), the spot data is construed as newly added to the original data 101c (step S53). Incidentally, in the case the next stage of the added spot data is read, spot data associated with the added spot data is preferably read from the difference data 102c, without reading it from the original data 101c.

Then, if the user selects spot data, it is judged whether or not spot data having the same signature 121 (or category code 122 or area code 123) of the selected spot data is included in the difference data 102c (step S54).

As a result of the judgement at the step S54, if it is judged that such spot data is not included in the difference data 102c (step S54: No), the system controller 20 judges that the subsidiary stage data below the stage of the spot data is not changed. Therefore, after then, the navigation processing such as a spot search is performed, using spot data in the original data 101c (step S55).

On the other hand, as a result of the judgement at the step S54, if it is judged that it is included in the difference data 102c (step S54: Yes), it is further judged whether or not a "option name" of the spot data is blank (step S56).

As a result of the judgement at the step S56, if it is judged that the "option name" is blank, the system controller 20 judges that the subsidiary stage data below the spot data is changed. Therefore, the next stage spot data of the original data 101c and the difference data 102c is read (step S57). Then, a series of processings from the step S52 to the step S54 is repeated until the last stage is read for example, the navigation processing such as a spot search is performed.

More specifically, with regard to the original data shown in FIG. 14, individual spot data is read from the original data 101c and the difference data 102c. In the first stage, since spot data whose "option name" is not blank does not exist in the difference data 102c, it is judged that spot data to be added does not exist. Then, "sport spot", "gourmet spot" and "play spot" are displayed/outputted on the display 44 so that the user can select "sport spot", "gourmet spot" and "play spot".

Now assume that the user selects the "play spot". In this case, spot data having the same signature 121, "signature C", of spot data in the original data 101c indicating the "play spot" does not exist in the difference data 102c. Therefore, the system controller 20 judges that the spot data of the subsidiary stage below the "play spot" is not changed, and after then performs the navigation processing such as a spot search on the basis of the original data 101c.

On the other hand, assume that the user selects the "sport spot". In this case, spot data having the same signature, "signature A", of spot data in the original data 101c indicating the "sport spot" exists in the difference data 102c and its "option name" is blank. Therefore, the system controller 20 judges that the spot data of the subsidiary stage below the "sport spot" is changed. Then, the spot data of the second stage in the original data 101c and the spot data of the second stage in the difference data 102c are read. Now assume that the user selects the "football stadium", the spot data of the third stage in the original data 101c and the spot data of the third stage in the difference data 102c are read, similarly to the aforementioned processings.

In the third stage of the difference data 102c, spot data whose "option name" indicates "Tochigi prefecture" exists. Therefore, the system controller 20 judges that the spot data indicating "Tochigi prefecture" is added, while "Saitama prefecture", "Metropolis of Tokyo" and "Tochigi prefecture" are displayed/outputted on the display 44 so that the user can select "Saitama prefecture", "Metropolis of Tokyo" and "Tochigi prefecture".

Then, if the user selects "Saitama prefecture", the spot data of the fourth stage in the original data 101c and the spot data of the fourth stage in the difference data 102c are read. Since spot data whose "option name" indicates "Komaba Stadium" exists in the difference data 102c, the spot data is construed as added. Therefore, "Omiya Football Stadium", "Saitama Stadium 2002" and "Komaba Stadium" are displayed/outputted on the display 44 so that the user can select "Omiya Football Stadium", "Saitama Stadium 2002" and "Komaba Stadium".

Conclusively, according to the third specific example, similarly to the first specific example and so on, it is relatively easy to perform a spot search with the latest spot data on the basis of the difference data 102c. Particularly in the third specific example, it is sufficient that a signature 121, a category code 122 and an area code 123 to identify the added spot data are recorded in the difference data 102c. Therefore, since a spot name to be recorded as "option name" can be omitted, it brings a great advantage of reducing a data volume of the difference data 102c.

### (Fourth Specific Example)

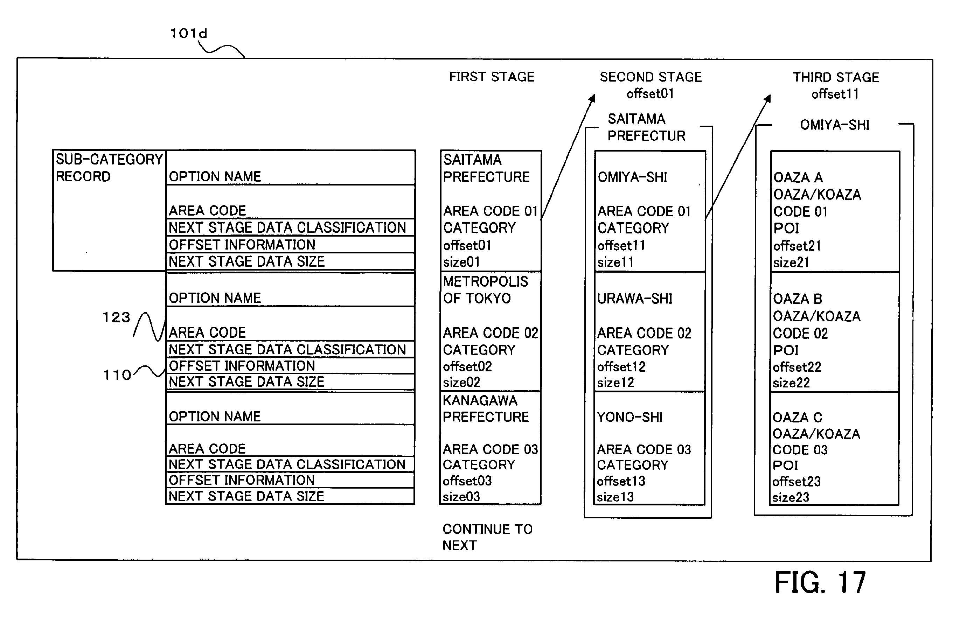

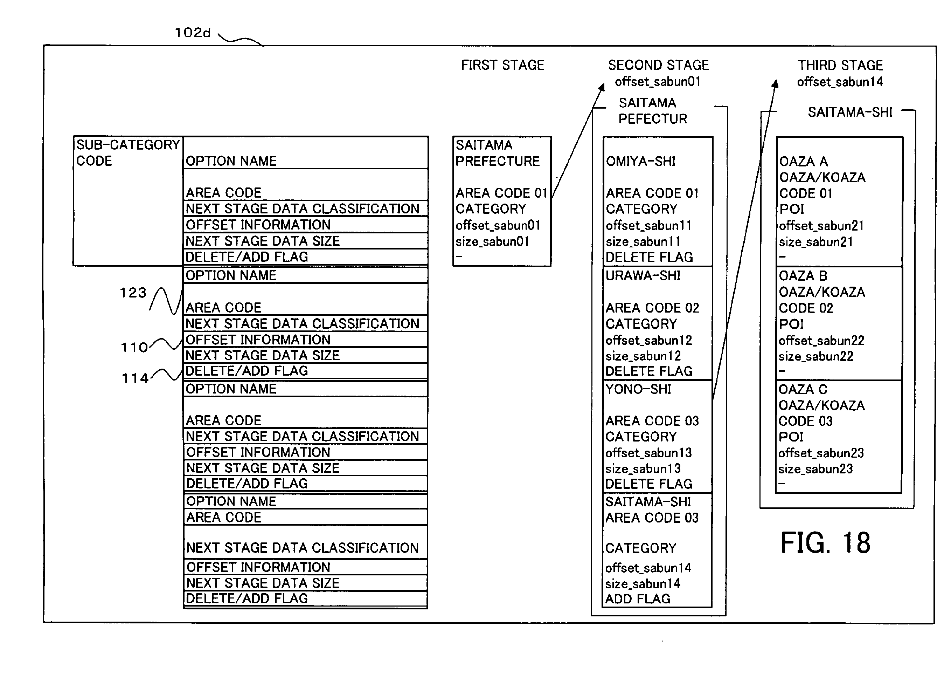

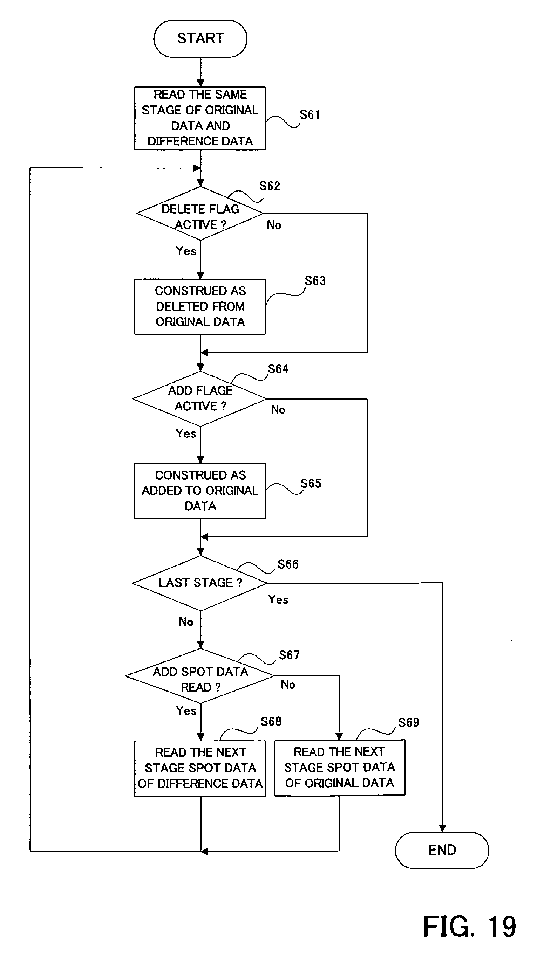

Next, with reference to FIG. 17 to FIG. 19, the fourth specific example will be discussed. FIG. 17 is a view conceptually illustrating the original data used for the navigation apparatus in the fourth specific example. FIG. 18 is a view conceptually illustrating the difference data used for the navigation apparatus in the fourth specific example. FIG. 19 is a flow chart illustrating an operational flow of searching spot data on the basis of the original data shown in FIG. 17 and the difference data shown in FIG. 18. Incidentally, in the fourth specific example, individual spots are categorized into a hierarchy structure by position address. Spot data is searched on the basis of the hierarchy structure, in the order from an upper stage of the hierarchy to a lower stage of the hierarchy.

As shown in FIG. 17, the original data 101d in the fourth specific example has a data structure substantially the same as the original data in the first to third specific examples. Particularly in the fourth specific example, area data categorized by prefecture is served as the first stage spot data, sub-area data categorized by municipality is served as the second stage spot data, and address area data categorized by address (or street number, town name or the like) in the municipality is served as the third stage spot data.

As shown in FIG. 18, the difference data 102d in the fourth specific example has a data structure substantially the same as the difference data in the first to the third specific examples. Particularly in the fourth specific example, individual spot data has a delete/add flag 114. The delete/add flag 114 indicates whether or not the spot data is deleted from the original data 101d, or whether or not the spot data is added to the original data. The delete/add flag 114 may be embodied in 2 bits of binary data. That is, for example, if the delete/add flag 114 indicates "01b", it means that the spot data is deleted, and if the delete/add flag 114 indicates "10b", it means that the spot data is added.

Incidentally, the delete/add flag 114 is not necessarily to be formed in unit flag information, but may be formed in two of flag information, similarly to the delete flag 111 and the add flag 112 in the first specific example.

Next, an exemplary operation of a spot search performed in the navigation processing on the basis of the original data 101d shown in FIG. 17 and the difference data 102d shown in FIG. 18 will be discussed, with reference to FIG. 19.

Firstly, under control of the system controller 20, the same stage of the original data 101d and the difference data 102d are read (step S61). Then, it is judged whether or not the delete flag is active, with reference to a delete/add flag 114 in the difference data 102a (step S62). That is, it is judged whether or not the delete/add flag 114 indicates that the spot data is to be deleted from the original data 101d.

As a result of the judgement at the step S62, if the delete flag is judged as inactive (step S62: No), the process goes to the step S64.

On the other hand, as a result of the judgement at the step S62, if the delete flag is judged as active (step S62: Yes), the spot data is construed as deleted from the original data 101d (step S63). For example, at the step S61, if the difference data 102d shown in FIG. 18 is read, since delete flags of spot data each indicating each second stage sub-area data, "Omiya-shi", "Urawa-shi" and "Yono-shi" are active, this three of spot data are construed as deleted from the original data 101d.

Then, it is judged whether or not the add flag is active, with reference to the delete/add flag 114 in the difference data 102a (step S64). That is, it is judged whether or not spot data to be added to the original data 101d exists.

As a result of the judgement at the step S64, if the add flag is judged as inactive (step S64: No), the process goes to the step S66.

On the other hand, as a result of the judgement at the step S64, if the add flag is judged as active (step S64: Yes), the spot data is construed as added to the original data 101d (step S65). For example, at the step S61, if the difference data 102d shown in FIG. 18 is read, spot data indicating "Saitama-shi" as the second stage area data is added.

Then, it is judged whether or not the stage read at the step S61 is the last stage (step S66). In this case, the judgement may be based on whether or not "next stage data classification" of the spot data is "POI" as mentioned above, or may be based on the user's instruction.

As a result of the judgement at the step S66, if the read stage is judged as the last stage (step S66: Yes), the navigation processing is performed on the basis of the spot data of this stage (or POI associated with the spot data), without reading new spot data in the original data 101d and the difference data 102d.

On the other hand, as a result of the judgement at the step S66, if the read stage is not judged as the last stage (step S66: No), spot data of the further lower stage is read under the user's instruction for example. Then, it is judged whether or not spot data to be read next is spot data added at the step S65 (step S67).

As a result of the judgement at the step S67, if the spot data is not judged as the added spot data (step S67: No), spot data in the next stage of the original data 101d is read (step S69). Then, with regard to the read spot data, a series of processings from step S62 to step S66 is repeated.

On the other hand, as a result of the judgement at the step S67, if the spot data is judged as the added spot data (step S67: Yes), spot data in the next stage of the difference data 102d is read (step S68). That is, spot data in the next stage, which is indicated by the offset information 110 of spot data in the difference data 102d construed as added at the step S65, is read. Then, with regard to the read spot data, a series of processings from step S62 to step S66 is repeated.

More specifically, at the step S61, area data in the original data 101d and area data in the difference data 102d are read. On this occasion, since the delete/add flag 114 of the area data in the difference data 102d is not active, spot data in the original data 101d is displayed/outputted on the display 44. Now, if the user selects spot data indicating "Saitama prefecture", the second stage sub-area data in the original data 101d and the difference data 102d respectively are further read. In this case, the delete/add flag 114 of the difference data 102d indicates that individual spot data indicating "Omiya-shi", "Urawa-shi" and "Yono-shi" are deleted, and spot data indicating "Saitama-shi" is added. Therefore, "Saitama-shi" is displayed/outputted on the display 44 so that the user can select "Saitama-shi". Then, if the user selects "Saitama-shi", address area data that is the third stage spot data of the difference data 102d is read, and displayed/outputted.

Incidentally, spot data further categorized in detail than spot data categorized by address area data address (e.g. spot data categorized by block number or room number) may be served, or spot data more roughly categorized than area data (e.g. spot data by region or country) may be served. Also in this arrangement, the same operation as the fourth specific example mentioned above is achieved.

Conclusively, according to the fourth specific example, similarly to the first specific example and so on, it is relatively easy to perform a spot search with the latest spot data on the basis of the difference data 102d. Additionally, particularly in the fourth specific example, an "address change" from the merger of municipalities can be reflected quickly and appropriately.

As discussed above, according to the examples of the navigation apparatus including the data search apparatus of the invention, it is relatively easy to perform a navigation processing (especially a spot search) with the latest spot data on the basis of a small data volume of the difference data. Therefore, the navigation processing with the latest map data is achieved, without updating (or restructuring or regenerating) the entire original data, or without replacing the hard disk. Additionally, it brings a further advantage that a map data maker or supplier (i.e. author) can save an economical cost or processing cost for updating the map data.

Incidentally, in the aforementioned examples, the original data 101 and the difference data 102 (or the difference add data 103, the difference delete data 104 and the difference correct data 105) preferably have the same data format. The data format may be a KIWI format. Thereby, it is possible to appropriately perform a spot search in a usual navigation processing, even with a combination of the difference data 102 and the original data 101.

On the other hand, the difference data 102 may be obtained from a record medium such as the DVD-ROM 34, the CD-ROM 33, an other removable medium and so on, or may be obtained via the network with the operation of the communication device 38. In any case, the aforementioned benefit is achieved, by acquiring the difference data 102 updated on the basis of the original data 101 that is generated at a predetermined time point, and by performing the navigation processing on the basis of the difference data.

Additionally, in this example, a spot data search has been discussed. Nevertheless, the present invention is not limited to this, by may be applicable to text data search, or various data search using the text data as keyword. Thereby, the various benefits mentioned above are also satisfactorily achieved.

Furthermore, the navigation apparatus according to the present invention is applicable not only to on-vehicle use discussed in the aforementioned various embodiments or examples, but also to various carriers including air planes, shipping, motor cycles and so on, or applicable to various navigation apparatus for pedestrians or animals equipped with cell phones or PDA's.

## Claims

1. A data search apparatus (200) for searching a general data list for desired spot data indicating a desired spot, the general data list comprising:
original data (211) including a plurality of original spot data each indicating a spot on a map; and
difference data (212) including at least one update spot data indicating an updated spot that is updated on the basis of the original data (211),
**characterized in that** said data search apparatus comprises:
a first acquirement device (201) for acquiring at least one of the plurality of original spot data;
a second acquirement device (202) for acquiring the update spot data from the difference data (212); and
a data output device (203) for combining the update spot data acquired by said second acquirement device (202) with the original spot data acquired by said first acquirement device (201) and outputting the combined data as the desired spot data.

2. The data search apparatus (200) according to claim 1, **characterized in that**
the difference data (212) includes difference add data, as the update spot data, indicating an added spot; and
if said second acquirement device (202) acquires the difference add data, said data output device (203) combines original spot data indicating the added spot with the original spot data acquired by said first acquirement device (201) and outputs the combined data as the desired spot data.

3. The data search apparatus (202) according to claim 1 or 2, **characterized in that**
the difference data (212) includes difference delete data, as the update spot data, indicating that the updated spot is deleted from the map; and
if said second acquirement device (202) acquires the difference delete data, said data output device (203) deletes original spot data indicating the deleted spot from the original spot data acquired by said first acquirement device (201), and outputs the original spot data from which the spot data indicating the deleted spot is deleted, as the desired spot data.

4. The data search apparatus (200) according to any one of claims 1 to 3, **characterized in that**
the difference data (212) includes difference correct data, as the update spot data, indicating that the updated spot is changed, and
if said second acquirement device (202) acquires the difference correct data, said data output device (203) changes the original spot data indicating the spot that is changed from the original spot data acquired by said first acquirement device (201), on the basis of the difference correct data, and outputs the changed original spot data as the desired spot data.

5. The data search apparatus according to any one of claims 1 to 4, **characterized in that**
the difference data (212) includes a plurality of update spot data,
one of the plurality of original spot data is associated with at least one of other original spot data in the plurality of original spot data, and has a hierarchy structure of data format having offset information indicating a relationship with the other original spot data,
one of the plurality of update spot data is associated with at least one of other update spot data in the plurality of update spot data, and has a hierarchy structure as data format having the offset information indicating a relationship with the other update spot data,
said first acquirement device (201) acquires the original spot data, with reference to the offset information indicating the relationship with the other original spot data, and
said second acquirement device (202) acquires the update spot data, with reference to the offset information indicating the relationship with the other update spot data.

6. The data search apparatus (200) according to claim 5, **characterized in that**
each of said one original spot data and said one update spot data has stage information indicating a relative stage position among its own in the hierarchy structure,
if said one updated spot data indicates that said one original spot data is updated, said one original spot data and said one update spot data have the same stage information.

7. The data search apparatus (200) according to claim 6, **characterized in that**
said one update spot data has a change flag indicating whether or not said other original spot data is changed, said other original spot data being associated by the offset information with said one original spot data having the same stage information as said one update spot data,
if the change flag indicates that said other original spot data is changed, said second acquirement device (202) acquires said other update spot data having the same stage information as said other original spot data, and if the change flag indicates that said other original spot data is not changed, said second acquirement device (202) does not acquire said other update spot data.

8. The data search apparatus (200) according to claim 7, **characterized in that**
said first acquirement device (201) does not acquire said other original spot data having the same stage information as said other update spot data, if the change flag indicates that said other original spot data is changed.

9. The data search apparatus (200) according to claim 5, **characterized in that**
each of the plurality of original spot data and the plurality of update spot data has a spot code indicating at least one of a genre, a category and a position of the spot.

10. The data search apparatus (200) according to claim 9, **characterized in that**
at least one of the plurality of update spot data indicates that at least one of the plurality of original spot data, having the same spot code as at least one of the plurality of update spot data, is changed,
said second acquirement device (202) acquires update spot data having the same spot code as the original spot data acquired by said first acquirement device (201) from the plurality of update spot data,
said data output device (203) replaces the original spot data acquired by said first acquirement device (201) with the update spot data acquired by said second acquirement device (202).

11. The data search apparatus (200) according to claim 9, **characterized in that**
each of the plurality of update spot data has a name code indicating a name of the spot indicated by each of the plurality of update spot data,
if at least one of the plurality of original spot data is changed, the name code of the update spot data having the same spot code as at least one of the plurality of original spot data is blank, and
if the update spot data to be added to the original spot data exists, the name code of the update spot data to be added is not blank.

12. The data search apparatus (200) according to any one of claims 1 to 11, **characterized in that**
the update spot data has combination information indicating a combination method of combining the update spot data with the original spot data, and
said data output device (203) outputs the desired spot data on the basis of the combination information.

13. A data search method of searching a general data list for desired spot data indicating a desired spot, the general data list comprising:
original data (211) including a plurality of original spot data each indicating a spot on a map; and
difference data (212) including at least one update spot data indicating an updated spot that is updated on the basis of the original data (211),
**characterized in that** said data search method comprises:
a first acquirement process of acquiring at least one of the plurality of original spot data;
a second acquirement process of acquiring the update spot data from the difference data (212); and
a data output process of combining the update spot data acquired at said second acquirement process with the original spot data acquired at said first acquirement process and outputting the combined data as the desired spot data.

14. A navigation apparatus (300) comprising a data search apparatus (200) for searching a general data list for desired spot data indicating a desired spot, the general data list comprising: original data (211) including a plurality of original spot data each indicating a spot on a map; and difference data (212) including at least one update spot data indicating an updated spot that is updated on the basis of the original data (211), said data search apparatus (200) comprising: a first acquirement device (201) for acquiring at least one of the plurality of original spot data; a second acquirement device (202) for acquiring the update spot data from the difference data; and a data output device (203) for combining the update spot data acquired by said second acquirement device (202) with the original spot data acquired by said first acquirement device (201) and outputting the combined data as the desired spot data,
**characterized in that** said navigation apparatus (300) further comprises:
a route search device (301) for searching a route to a spot indicated by the desired spot data outputted from said data output device (203); and
a display output device (302) for displaying the route.

15. A navigation method implemented in a navigation apparatus (300) comprising a data search apparatus (200) for searching a general data list for desired spot data indicating a desired spot, the general data list comprising: original data (211) including a plurality of original spot data each indicating a spot on a map; and difference data (212) including at least one update spot data indicating an updated spot that is updated on the basis of the original data (211), said data search apparatus comprising: a first acquirement device (201) for acquiring at least one of the plurality of original spot data; a second acquirement device (202) for acquiring the update spot data from the difference data (212); and a data output device (203) for combining the update spot data acquired by said second acquirement device (202) with the original spot data acquired by said first acquirement device (201) and outputting the combined data as the desired spot data,
**characterized in that** said navigation method further comprises:
a route search process of searching a route to a spot indicated by the desired spot data outputted from said data output device (203); and
a display output process of displaying the route.

16. A data set **characterized in that** said data set comprises:
original data (211) including a plurality of original spot data each indicating a spot on a map; and
difference data (212) including at least one update spot data indicating an updated spot that is updated on the basis of the original data.

17. A computer program product in a computer-readable medium for tangibly embodying a program of instructions executable by a computer provided for a data search apparatus (200) for searching a general data list for desired spot data indicating a desired spot, the general data list comprising: original data (211) including a plurality of original spot data each indicating a spot on a map; and difference data (212) including at least one update spot data indicating an updated spot that is updated on the basis of the original data (211), said data search apparatus (200) comprising: a first acquirement device (201) for acquiring at least one of the plurality of original spot data; a second acquirement device (202) for acquiring the update spot data from the difference data (212); and a data output device (203) for combining the update spot data acquired by said second acquirement device (202) with the original spot data acquired by said first acquirement device (201) and outputting the combined data as the desired spot data,
the program of instructions is to make the computer function as at least a part of said first acquirement device (201), said second acquirement device (202) and said data output device (203).
